(19) Europäisches Patentamt

European Patent Office

Office européen des brevets

(11) **EP 1 553 571 A2**

(12) **EUROPEAN PATENT APPLICATION**

(43) Date of publication:
**13.07.2005 Bulletin 2005/28**

(51) Int Cl.7: **G11B 7/09**

(21) Application number: **05100012.3**

(22) Date of filing: **03.01.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **08.01.2004 JP 2004003296**

(71) Applicant: **Kabushiki Kaisha Toshiba
Tokyo (JP)**

(72) Inventor: **Yonezawa, Minoru Toshiba Corporation
Minato-ku Tokyo, 105-8001 (JP)**

(74) Representative: **Henkel, Feiler & Hänzel
Möhlstrasse 37
81675 München (DE)**

(54) **Optical disc apparatus and its control method**

(57)    Before tracking control, tilt control is performed using an offset value of a differential phase tracking error signal obtained by performing signal process of the outputs from, e.g., a 4-split photodetector.

A direction in which the tilting angle of the tilt control is to be corrected is determined based on information indicating whether the center value of the differential phase tracking error signal is "offset to plus or minus". Hence, tilt servo that aims at an optimal point is made while observing the amplitude of the differential phase tracking error signal using this offset polarity information.

FIG.3

**Description**

The present invention relates to an optical disc apparatus for recording or reproducing high-density information represented by, e.g., Hi-vision video data, and its control method. More specifically, the present invention relates to improvement of tilt control according to the tilt state of an optical disc mounted on an apparatus. Furthermore, the present invention relates to a detection method of a tilt error signal in tilt control.

In recent years, with an increase in recording density of optical discs using a short-wavelength laser, it is required to appropriately compensate for the tilt of an optical head (and its objective lens) with respect to the recording surface of a disc loaded into a disc drive across the entire surface from the inner periphery to the outer periphery of the disc. As tilt compensation means, tilt control (tilt compensation) is known. Using this tilt control together with the focusing control and tracking control with respect to the optical head, recording/reproduction of high-density optical discs is attained.

A prior art associated with the tilt control performs tilt compensation (tilt adjustment) before tracking (see patent reference 1: FIG. 13 of Jpn. Pat. Appln. KOKAI Publication No. 2003-217153). In this patent reference 1, a push-pull tracking error signal is used in tilt compensation (see FIG. 11 of this reference). In this case, it is difficult for the dimensions of a Hi-vision recording compatible 12-cm optical disc using a blue laser to separate a tilt amount from lens shift factors, and it is not practical to detect the tilt amount from the push-pull signal.

In the tilt control, "the tilt direction in which correction is to be made to increase the amplitude of a reproduction signal (detection signal)" must be known. In association with this point, a so-called hill-climbing method for selecting a good result by distributing the tilting angle to both plus and minus angles is known (see patent reference 2: Jpn. Pat. Appln. KOKAI Publication No. 2000-311368). Note that this patent reference 2 utilizes the amplitude of a reproduction signal (information) obtained after application of tracking unlike in patent reference 1 (see FIG. 4 of this reference).

Furthermore, in the tilt control, a prior art that generates a tilt error signal from the difference between a DPD signal and push-pull signal is known ((see patent reference 3: Jpn. Pat. Appln. KOKAI Publication No. 2001-307359). (Note that the DPD signal is a position error signal obtained by adding signals from diagonally opposed photodetectors, comparing the phase difference between the two obtained signals, and determining the phase difference as that signal.) When a tilt error signal is generated based on the difference between the DPD signal and push-pull signal, both the DPD signal and push-pull signal offset due to the influence of tilt. Also, the shift influence of an objective lens suffers. In this patent reference 3, the lens shift influence is canceled by calculating the difference between the two signals and only a tilt component which has different influences on the two signals is detected under the assumption that the DPD signal is influenced by tilt but its influence is small. However, in practice, the two signals must be detected at the same time, and the circuit arrangement becomes considerably complicated to implement this.

It is difficult for the dimensions of an optical disc that aims at high-density information recording (e.g., Hi-vision recording compatible 12-cm optical disc using a blue laser) to detect the tilt amount, and to perform satisfactory tilt control (tilt compensation). This problem is not limited to a single-sided/single-recording layer type disc, but is more serious in a double-sided/multi-recording layer type disc with a lower laser reflectance.

The present invention has been made in consideration of the above situation and has as its object to improve tilt control in a high-recording density optical disc.

In one embodiment of the present invention, tilt control (tilt compensation) is performed using the center value of a tracking error signal (as an example, the offset value of a differential phase tracking error signal obtained by applying a signal process to the outputs from 4-split photodetectors) while no tracking control is applied.

According to one embodiment of the present invention, the correction direction of the tilting angle of the tilt control can be determined from information indicating whether the center value of the differential phase tracking error signal is "offset to plus or minus". Hence, tilt servo that aims at an optimal point of the tilt compensation can be made while observing the amplitude of the differential phase tracking error signal using this offset polarity information.

The tilt compensation sequence can be modified using information which is individually obtained for each disc recognized by a device (disc drive) (i.e., information which is extracted from a tracking error signal that can change depending on the mount state and radial position of a disc). Hence, appropriate tilt compensation (tilt control) can be implemented in correspondence with the mount state of each individual disc.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a block diagram for explaining the arrangement of an optical disc apparatus according to an embodiment of the present invention;

FIG. 2 is a view for explaining an example of a differential phase tracking error signal detected due to eccentricity of an optical disc (when a beam spot traces on information pits of a data area);

FIG. 3 is a view for explaining an example of the relationship between the radial tilt (tilt in the radial direction) of an optical disc and differential phase tracking error signal;

FIG. 4 is a view for explaining an example of the correlation between the tilt of an optical disc and differential phase tracking error signal;

FIG. 5 is a view for explaining the waveforms of a differential phase tracking error signal depending on the tilt amounts of an optical disc;

FIG. 6 is a view for explaining an example of a differential phase tracking error signal detected due to the phase difference of 4-split photodetectors when a beam spot is on track;

FIG. 7 is a block diagram showing an example of the arrangement of a differential phase tracking error signal detection circuit;

FIG. 8 is a view showing an example of a differential phase tracking error signal detected by the detection circuit shown in FIG. 7;

FIG. 9 is a block diagram showing another example of a differential phase tracking error signal detection circuit;

FIG. 10 is a view for explaining another example of a differential phase tracking error signal detected due to eccentricity of an optical disc (when a beam spot traces an area other than the data area);

FIG. 11 is a view showing an example of an optical disc (single-sided/single-layer type) that can be used in the present invention;

FIG. 12 is a view showing an example of an optical disc (single-sided/double-layer type) that can be used in the present invention;

FIG. 13 is a view showing an example of the configuration of a recording area and the relationship between the physical and logical sector numbers of a single-sided/single-layer type read-only optical disc;

FIG. 14 is a view showing an example of the configuration of a recording area and the relationship between the physical and logical sector numbers of a single-sided/double-layer type (parallel layout) read-only optical disc;

FIG. 15 a view showing an example of the configuration of a recording area and the relationship between the physical and logical sector numbers of a single-sided/double-layer type (opposite layout) read-only optical disc;

FIG. 16 is a view showing an example of the configuration of a recording area and the relationship between the physical and logical sector numbers of a single-sided/single-layer type rewritable optical disc (having a land-groove structure);

FIG. 17 is a view showing an example of the configuration of a recording area and the relationship between the physical and logical sector numbers of a single-sided/double-layer type (parallel layout) rewritable optical disc (having a land-groove structure);

FIG. 18 is a block diagram showing an example of the arrangement (tilt signal detector 30 and its peripheral components) for detecting a differential phase tracking error signal which includes waveform components (FIG. 2 and the like) according to eccentricity of an optical disc;

FIG. 19 is a view showing an example of the relationship between a differential phase tracking error signal detected due to eccentricity of an optical disc, and a tracking error signal sampled by tilt signal detector 30 in FIG. 18;

FIG. 20 is a view for explaining a differential phase tracking error signal (waveform observed upon passing over tracks) detected due to eccentricity of an optical disc;

FIG. 21 is a view showing another example of the arrangement for detecting a differential phase tracking error signal which includes waveform components according to eccentricity of an optical disc, and an example of a differential phase tracking error signal detected by this arrangement;

FIG. 22 is a view showing an example of the relationship between a differential phase tracking error signal detected due to eccentricity of an optical disc and a fine positioning mechanism drive signal in the example of the arrangement shown in FIG. 21;

FIG. 23 is a flowchart for explaining the servo sequence of the optical disc apparatus according to the embodiment of the present invention;

FIG. 24 is a flowchart for explaining the tilt adjustment sequence (an example of storing an adjustment value by applying tilt servo according to the radial position of a disc) according to the embodiment of the present invention;

FIG. 25 is a flowchart for explaining the tilt adjustment sequence (an example of storing tilt servo adjustment values of lead-in and lead-out areas of a disc, and using a value calculated from the stored adjustment values for tilt servo of a data area between the lead-in and lead-out areas) according to another embodiment of the present invention;

FIG. 26 is a flowchart for explaining the tilt adjustment sequence (an example of storing tilt servo adjustment values of a lead-in area and outer periphery of a disc, and using a value calculated from the stored adjustment values for tilt servo of a data area between the lead-in area and outer periphery) according to still another embodiment of the present invention;

FIG. 27 is a block diagram showing an example of the arrangement that attains tilt adjustment using tilt adjustment values stored in the sequence shown in FIGS. 24 to 26 and the like;

FIG. 28 is a flowchart for explaining an example of the access sequence to a system lead-out area at the outermost periphery of a disc;

FIG. 29 is a flowchart for explaining another example of the access sequence to a system lead-out area at the outermost periphery of a disc;

FIG. 30 is a view showing changes of a differential phase tracking error signal and the like during access to the system lead-out area at the outermost periphery of a disc;

FIG. 31 is a view for explaining an example of the profile of a tilt correction amount obtained by tilt compensation amount storage circuit 32;

FIG. 32 is a block diagram showing an example of the arrangement of a control system that accesses the system lead-out area at the outermost periphery of a disc;

FIG. 33 is a view for explaining an example of a method of detecting the tilt (warp and/or tilt from a rotation shaft of a disc) of an optical disc loaded into a drive of an optical disc apparatus;

FIG. 34 is a view for explaining another example of the profile of a tilt correction amount (which is different from FIG. 31) obtained by tilt compensation amount storage circuit 32;

FIG. 35 is a view for explaining an example of tracking error detection by a push-pull method;

FIG. 36 is a flowchart for explaining the flow of processes including tilt adjustment according to the embodiment of the present invention (the flow of processes from when a ROM or RAM disc is mounted until reproduction and/or recording start/starts);

FIG. 37 is a view for explaining the relationship between the tracking error signal by the push-pull method and tilt (radial tilt) of a disc (the directions of tilts in a, b, and c in FIG. 37 respectively correspond to A, B, and C in FIG. 3);

FIG. 38 is a block diagram showing an example of the arrangement for estimating a reproduction signal error rate; and

FIG. 39 is a flowchart for explaining a modification of the tilt adjustment sequence.

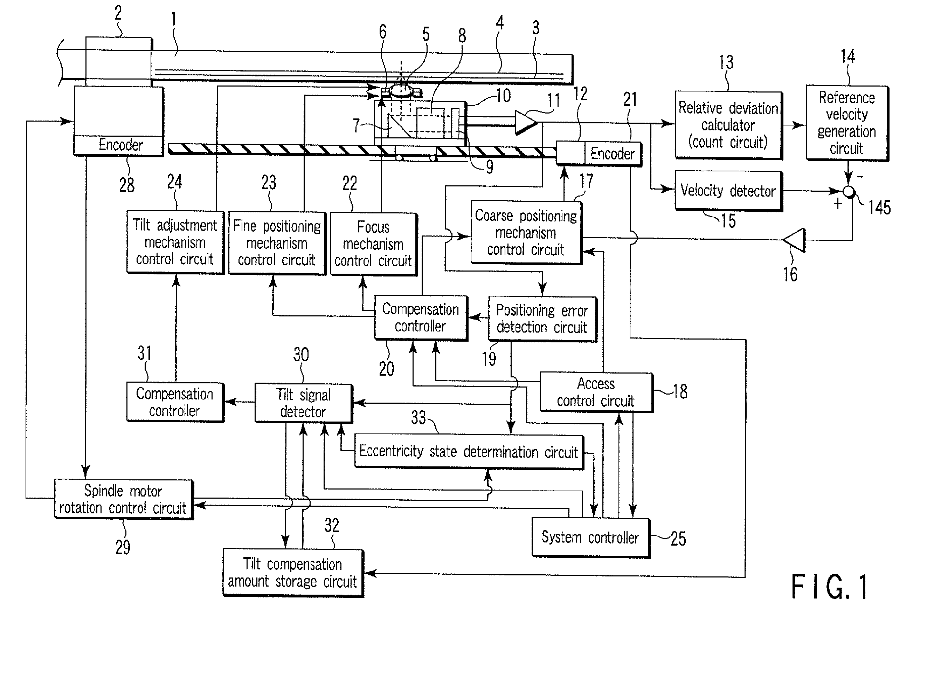

FIG. 1 is a block diagram for explaining the arrangement of an optical disc apparatus (information recording/reproduction system) according to an embodiment of the present invention. FIG. 1 exemplifies an overview of a system that records or reproduces information using an optical disc which has one or a plurality of information recording layers on one surface.

The optical disc apparatus shown in FIG. 1 records or reproduces information on or from an optical disc which has an information recording layer having spiral or concentric tracks. The optical disc apparatus comprises: an optical head (10) which focuses a laser beam on the information recording surface of optical disc 1 via objective lens 5, and records/reproduces information on the disc; a focus controller (22) which deviates objective lens 5 so as to focus a beam spot of the laser beam on the information recording layer of optical disc 1; a positioning unit (12) which positions optical head 10 to a target track; a photodetector (9: 102 in FIG.

7 and the like to be described later) which is arranged in optical head 10 and receives (some components) of reflected light reflected by optical disc 1 (and is split into a plurality of areas); a position error detector (19) which detects the position error between the beam spot focused by optical head 10 and the target track by performing signal processes of the outputs from photodetector 9; a tilt actuator (6) which tilts objective lens 5 to improve the quality of the beam spot focused by objective lens 5; a tilt controller (24, 25, 30 to 32) which performs tilt control of tilt actuator 6 using the signal from position error detector 19; and a positioning controller (20, 17, 23) which deviates positioning unit 12 on the basis of the detection result from position error detector 19 after the tilt control of tilt actuator 6 by the tilt controller (24, 25, 30 to 32).

The information recording/reproduction mode in the apparatus (system) shown in FIG. 1 will be described below. Optical disc 1 is a rewritable medium having a phase change recording layer as an information recording layer (or a read-only medium having an information recording layer formed by pits), and undergoes information recording or reproduction by means of a light beam focused by objective lens 5 (the following description will be continued mainly under the assumption of a rewritable recording medium).

This optical disc 1 is rotated by spindle motor 2. Especially, upon information recording, a ZCLV (Zoned Constant Linear Velocity) scheme is adopted to maintain a constant rotational linear velocity. However, in normal reproduction, disc 1 is rotated to maintain a constant rotational speed or to maintain a constant linear velocity according to the radial position of disc 1. This rotation is controlled by spindle motor rotation control circuit 29. Rotation control circuit 29 detects the rotational angular velocity of motor 2 by encoder 8, and applies servo control to rotation of motor 2 in accordance with the detection result.

Optical head (optical pickup PUH; Pick Up Head) 10 used as one component of recording/reproduction means irradiates a predetermined information recording layer of optical disc 1 with a laser beam of a predetermined wavelength (e.g., 650 nm or 405 nm) to attain recording (mark formation) or reproduction of information. This recording is done by, e.g., a mark length recording method which provides information to edges of recording marks.

A laser beam emitted by a laser beam source arranged in optical head 10 is collimated into collimated light, which enters optical correction mechanism 8 via an optical element (not shown). This optical correction mechanism 8 corrects aberrations by a relay lens, liquid crystal element, and the like (not shown) so as to prevent a beam spot formed on the information recording layer from suffering any spherical aberration. The light beam corrected by this optical correction mechanism 8 enters objective lens 5 via mirror 7, and forms a beam spot on the predetermined information recording surface of optical disc 1.

On the other hand, some light components of light reflected by the information recording surface of optical disc 1 enter photodetector 9 via mirror 7 again. This photodetector 9 has a plurality of split photodetection cells (e.g., 4-split cells), and detects position errors of the beam spot focused on the information recording surface with respect to the target position by their photoelectric conversion processes of these cells. The position errors include a focusing error required to form a beam spot which is in focus with the information recording surface, a tracking error (to be described later), a tilt error of the disc surface with respect to the optical axis of objective lens 5, and the like.

On the information recording surface of optical disc 1, information tracks or pit arrays (in a read-only disc) required to record/reproduce information are formed. A positional deviation of a beam spot from the target track or pit array in the radial direction of the disc corresponds to a tracking error. The tilt error is a deviation angle between the optical axis of a light beam focused by objective lens 5 and the normal to optical disc 1. If this angle is large, coma is produced in the beam spot, thus deteriorating the spot quality.

In the information recording/reproduction system, these various position errors are detected by positioning error detection circuit 19 using photodetector 9, difference circuit (OP amplifier circuit) 11, and the like. Then, compensation controllers 20, 31, and the like calculate control manipulation amounts corresponding to these positioning errors so that an appropriate beam spot is formed on the information recording surface of optical disc 1. The calculated control manipulation amounts are input focus mechanism control circuit 22, fine positioning mechanism control circuit 23, coarse positioning mechanism control circuit 17, and tilt adjustment mechanism control circuit 24. These control circuits drive and control lens actuator 6 and seek motor 12 so as to appropriately form beam spot at the target position on optical disc 1 on the basis of the input control manipulation amounts.

[Coarse access]

Access to a predetermined position in a data area of optical disc 1, which is required to start recording or reproduction in a single information recording layer where a beam spot is currently formed, can be made as follows.

Access starts when access control circuit 18 temporarily opens track positioning control which is made based on a tracking error signal detected by positioning error detection circuit 19. When this track positioning control is opened and coarse positioning mechanism (seek motor) 12 or fine positioning mechanism (lens actuator) 6 receives the control manipulation amount from its control circuit 17 or 23, a beam spot begins to move in the radial direction of optical disc 1 (toward an access target track). With this movement, a tracking error (TE) is generated, and the access is controlled using this position error signal.

When relative deviation calculator (count circuit) 13 counts binarized tracking error signals, access control circuit 18 can detect the number of information tracks across which the beam spot has moved by access. Access control circuit 18 calculates in advance the number of information tracks to be accessed on the basis of the address of an information track (target track) as an access target, and that of an information track (current track) from which access starts. The number of passed tracks is subtracted from the number of target access tracks to calculate the number of remaining tracks. Access control circuit 18 controls reference velocity generation circuit 14, in which a target moving velocity with respect to the number of remaining tracks calculated in this way is given as a reference value, to generate a target velocity.

On the other hand, by dividing the spacing between neighboring information tracks by the time interval of leading pulses of the binarized track position error signals, the moving velocity at the time of passage of each track can be detected. This detection is done by velocity detector 15. The target velocity and detected velocity are compared by comparison circuit 145 so that the detected velocity follows the target velocity, and the difference value between the two velocities is appropriately amplified by amplifier 16 and is input to coarse positioning mechanism control circuit 17. Furthermore, depending on the positional relationship between the target track and beam spot, the difference value is input to fine positioning mechanism control circuit 23 via access control circuit 18 to drive fine positioning mechanism (lens actuator) 6.

When the beam spot reaches a position immediately before the target track, access control circuit 18 closes the track position error control system again (tracking servo ON). Then, circuit 18 calculates a control manipulation amount required to drive fine positioning mechanism 6 to remove the tracking errors using compensation controller 20, and supplies it to fine positioning mechanism control circuit 23. After that, the address of the actually reached target track is read by a signal processing system of the system (system controller 25). If this address is substantially equal to that of the target information track, the access ends.

In the system arrangement shown in FIG. 1, tilt signal detector 30 detects a tilt error signal (indicating a tilt amount of the optical axis of objective lens 5 with respect to the information recording surface of disc 1) from a tracking error signal detected by positioning error detection circuit 19. The tilt error signal detected by this detector 30 is stored in tilt compensation amount storage circuit 32. Information of tilt error signals stored in this storage circuit 32 (i.e., profile information of tilt amounts which can change in accordance with the radial position of disc 1) is read out upon actually recording or reproducing information. The readout information is transferred to tilt adjustment mechanism control circuit 24 via compensation controller 31 to implement tilt compensation suited to each disc 1 mounted on the apparatus of FIG. 1. Note that details of detection of tilt error signals from tracking error signals will be explained later. The eccentricity state of disc 1 mounted on the apparatus of FIG. 1 is detected by eccentricity state determination circuit 33, and this detection process will also be explained later.

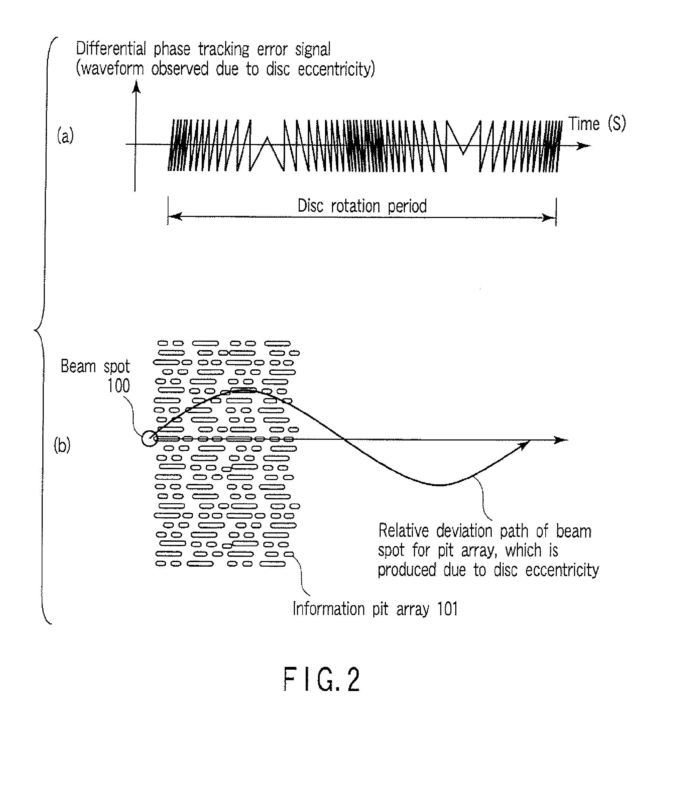

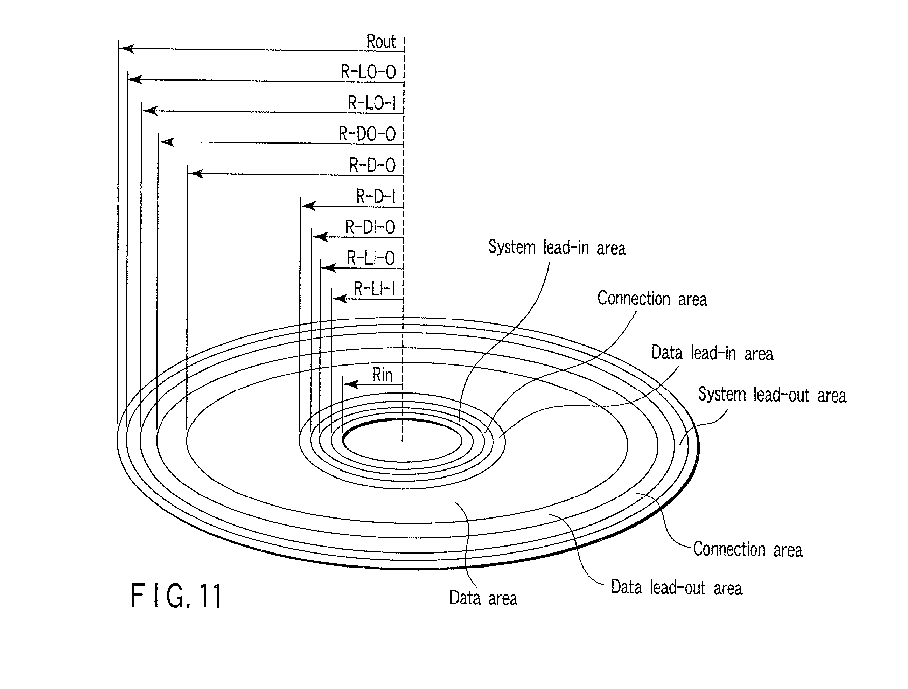

FIG. 2 is a view for explaining an example of a differential phase tracking error signal detected due to eccentricity of optical disc 1 (when a beam spot traces on information pits of a data area). A positioning error signal obtained from a servo signal processing circuit system (positioning error detection circuit 19) by the signal process of the arrangement shown in FIG. 1 is observed as a waveform shown in FIG. 2(a), when optical disc 1 is rotated by spindle motor 2 while a beam spot is in focus with the information recording surface of a system lead-in area (see FIG. 11) of disc 1. Such waveform is generated due to the influence of disc eccentricity when optical disc 1 is mounted on spindle motor 2. FIG. 2(b) depicts a relative deviation of a beam spot with respect to disc 1. A deviation of a beam spot from disc 1 due to the influence of eccentricity can be expressed, as shown in FIG. 2(b). As a result, the obtained differential phase tracking error signal becomes a periodic signal which is repeated at optical disc rotation periods, as shown in (a) and (b) of FIG. 2.

[Relationship between tilt and differential phase tracking error signal]

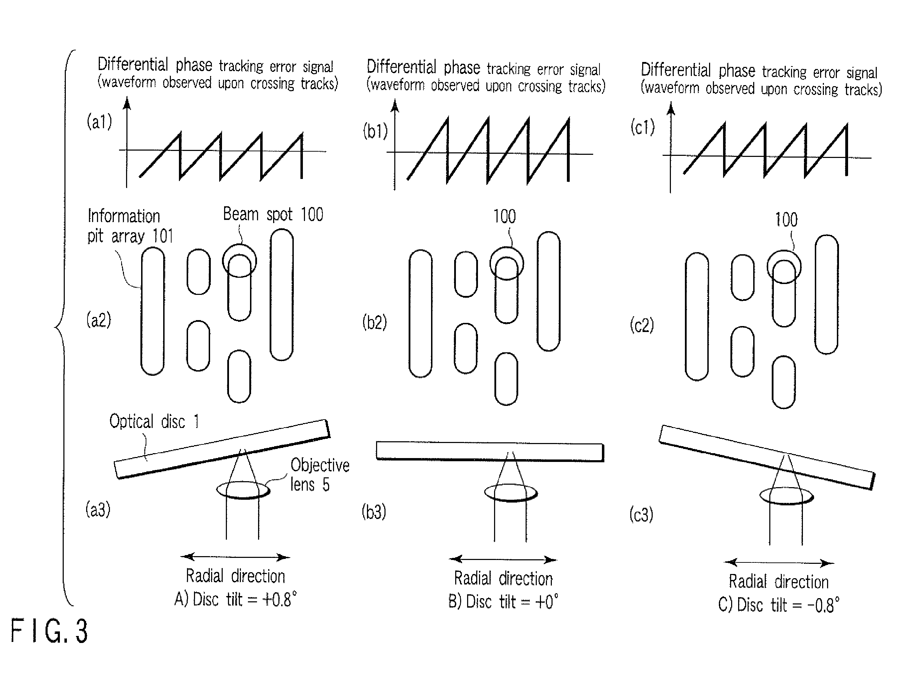

FIG. 3 is a view for explaining an example of the relationship between the radial tilt (tilt in the radial direction) of an optical disc and the differential phase tracking error signal. When the optical disc surface has a tilt with respect to the optical axis of objective lens 5, as shown in (a3) and (c3) of FIG. 3, the amplitude of the differential phase tracking error signal in FIG. 2(a) varies, and that signal is observed as a signal (its signal waveform center value) having an offset, as shown in (a1) and (c1) of FIG. 3. It is known that a tracking error signal has an offset due to the influence of tilt. However, since such signal is observed while applying tracking, it is hard to separate an offset amount generated when objective lens 5 follows eccentricity of mounted disc 1 and that which is generated due to the influence of tilt. In a conventional optical disc (an optical disc of the generation before that of a high-density disc as a target of the present invention), the differential phase tracking error signal has a small offset amount due to the tilt of the optical disc, and no tilt amount due to the offset amount of the differential phase tracking error signal is detected.

Along with an increase in recording density of optical discs in recent years, the wavelength of a laser used in information recording/reproduction becomes shorter, and the numerical aperture NA (stop angle) of an objective lens assumes a larger value. For example, in optical disc 1 under the condition that the NA of objective lens 5 is 0.65, the distance from the surface of the optical disc to the information recording surface is 0.6 mm, and wavelength λ of the laser is about 400 nm, the diameter of a beam spot (100 in FIG. 3) formed on the information recording surface is 0.5 μm or less, and the differential phase tracking error signal conspicuously offsets, as shown in (a1) and (c1) of FIG. 3, due to the influence of the tilt of optical disc 1.

It is found that the influence of an offset conspicuously appears in the differential phase tracking error signal when a condition "K exceeds 600" is satisfied, wherein parameter K is calculated using the diameter of the beam spot proportional to λ/NA and distance d from the optical disc surface to the information recording surface, i.e.,

$$K = d/(\lambda/NA) = (d/\lambda) \, NA \qquad (1)$$

Distance d is proportional to K since the offset amount of return light due to the disc tilt increases with increasing d. The beam spot size on the information recording surface becomes smaller with decreasing (λ/NA). At the same time, the information track pitch of the information recording surface becomes smaller, and the influence of an offset generated due to the disc tilt becomes larger. For this reason, (λ/NA) is inversely proportional to K. The embodiment of the present invention proposes a tilt control method for optical disc 1 that satisfies the condition (K > 600) of equation (1).

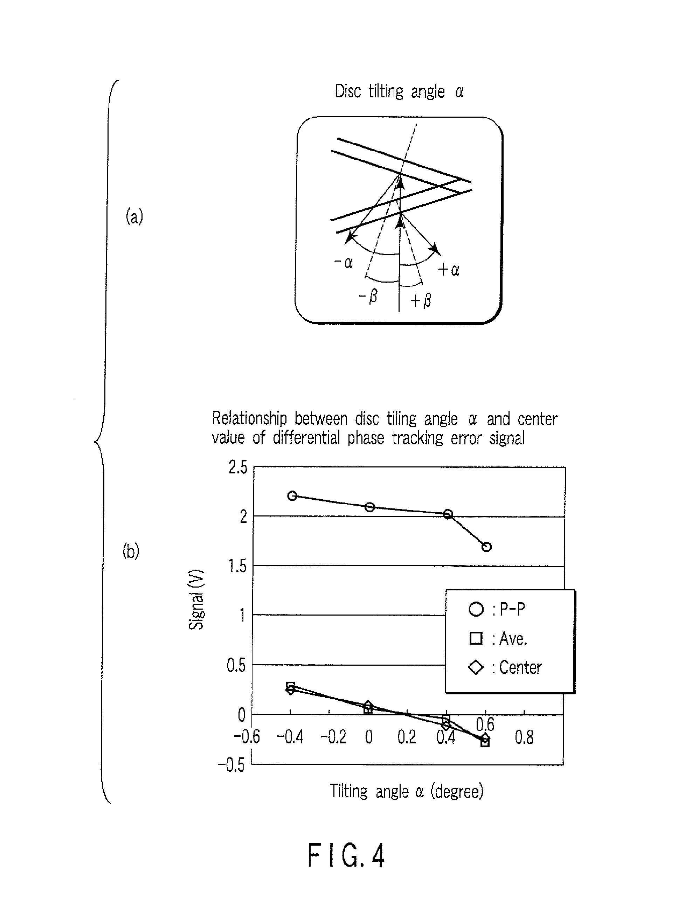

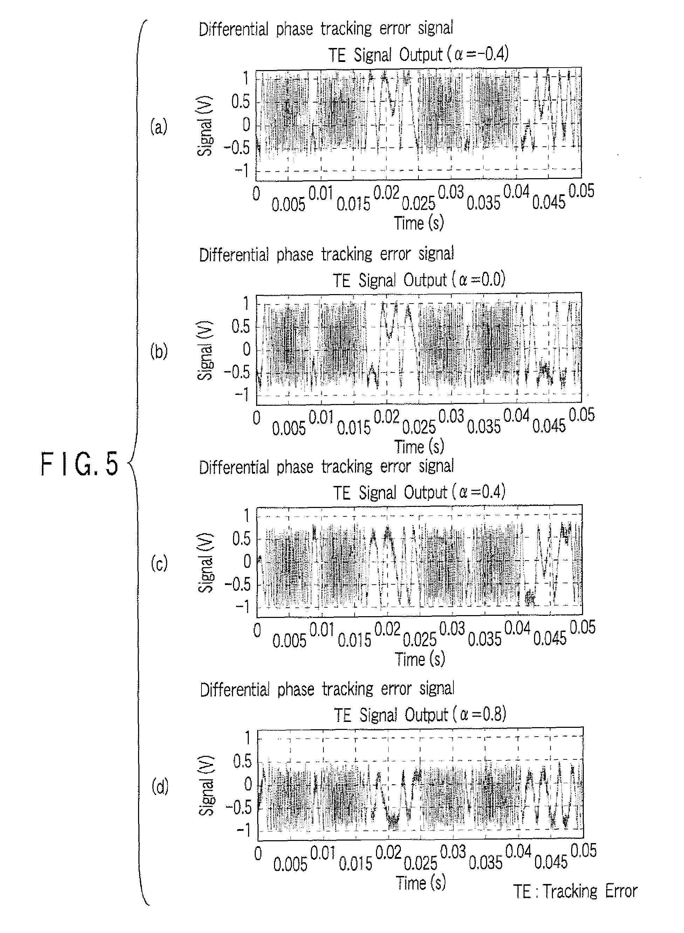

FIG. 4 is a view for explaining an example of the correlation between the tilt of an optical disc and the differential phase tracking error signal. FIG. 5 shows examples of waveforms of the differential phase tracking error signal in accordance with the tilt amounts of an optical disc. As shown in FIG. 4(a), when the surface of optical disc 1 has a tilt ±α (degrees) with respect to the optical axis of objective lens 5, the signal level of the differential phase tracking error signal changes, as shown in FIG. 4(b) or (a) to (d) of FIG. 5, in correspondence with tilting angle α. Such signal change is similarly observed even from the viewpoint of the peak-to-peak (P-P) value, the average value (Ave), or the center value (Center) of the signal.

In FIG. 5, (a) to (d) show experimental results of the relationship between the differential phase tracking error signal and the tilt of disc 1 when the NA of objective lens 5 is 0.65, the distance from the surface of the optical disc to the information recording surface is 0.6 mm, and wavelength λ of the laser is about 400 nm. FIG. 4(b) shows a graph of these experimental results. As can be seen from FIG. 4(b), the center value of the differential phase tracking error signal clearly deviates in accordance with tilting angle α (even when α is a relatively small tilt amount equal to or smaller than 0.4). As can be seen from FIG. 5(d), when tilting angle $\alpha$ becomes too large ($\alpha = 0.8$), the amplitude of the differential phase tracking error signal is reduced.

More specifically, assuming that the change range of the tilt amount is extended to a certain range or more, not only the center value but also the amplitude of the differential phase tracking error signal changes. In this case, the change in center value should be observed after correction is made to a state free from any change in amplitude, since an actual tilt amount can be recognized more accurately. Hence, a tilt compensation amount can be obtained more accurately by the process for normalizing the amplitude of the differential phase tracking error signal (with reference to tilting angle $\alpha = 0$, and then calculating its center value.

[Sequence for making tilt control after focus control]

As described above, the differential phase tracking error signal, which produces an offset depending on the tilt of disc 1, as described above, is detected while only focusing control is applied to objective lens 5 mounted in optical head (PUH) 10. In this case, objective lens 5 is located at a neutral position or free position in the tracking direction.

The embodiment of the present invention applies tilt control first in this state (wherein objective lens 5 is located at a neutral position or free position in the tracking direction) without any tracking control (tracking servo OFF). Then, after lens actuator 6 that holds objective lens 5 is controlled in the tilt rotation direction (it undergoes tilt compensation), tracking control is made.

As described above, the differential phase tracking error signal offsets according to a relative tilt amount between optical disc 1 and objective lens 5 at the beam spot formation position. When objective lens 5 shifts from the center of the incoming optical axis, a similar offset is generated. For this reason, it becomes difficult to extract only the influence of the relative tilt amount between the optical disc and objective lens from the offset amount of the tracking error signal while the tracking control is ON. In the embodiment of the present invention, in order to remove the influence of the objective lens shift, a signal component which has high correlation with the relative tilt amount is extracted from the tracking error signal before the tracking control is applied.

The tilt error signal detection method and tilt control method according to the embodiment of the present invention in the optical disc apparatus (system) in FIG. 1 will be described below.

[Acquisition of tracking error signal in system lead-in area on inner periphery side]

When optical disc 1 is rotated by spindle motor 2, optical head 10 is moved by seek motor 12 in the inner periphery direction, and reaches its accessible innermost peripheral position. At this position, positioning control is made to deviate lens actuator 6, which holds objective lens 5 on optical head 10, in a direction perpendicular to the disc surface, and to bring a beam spot focused by objective lens 5 into focus on the information recording surface of optical disc 1. Subsequently, seek motor 12 or lens actuator 6 that holds objective lens 5 is driven to deviate objective lens 5 slightly to the outer or inner periphery side, thus deviating the beam spot focused by objective lens 5 on the information recording surface of optical disc 1 to the outer or inner periphery side. When the beam spot deviates in this way, the beam spot can reach a system lead-in area (see FIG. 11) assured near the innermost periphery of optical disc 1. Note that this system lead-in area is formed by a pit array.

With the above sequence, when the beam spot has reached the system lead-in area, a signal processing circuit that processes return light from the beam spot reproduces information of the system lead-in area. Of this signal processing circuit, a servo signal processing circuit receives return light from the beam spot by 4-split photodetectors (components of photodetector 9), and positioning error detection circuit 19 processes signal outputs from the four photodetectors, thus detecting a differential phase tracking error signal for tracking servo.

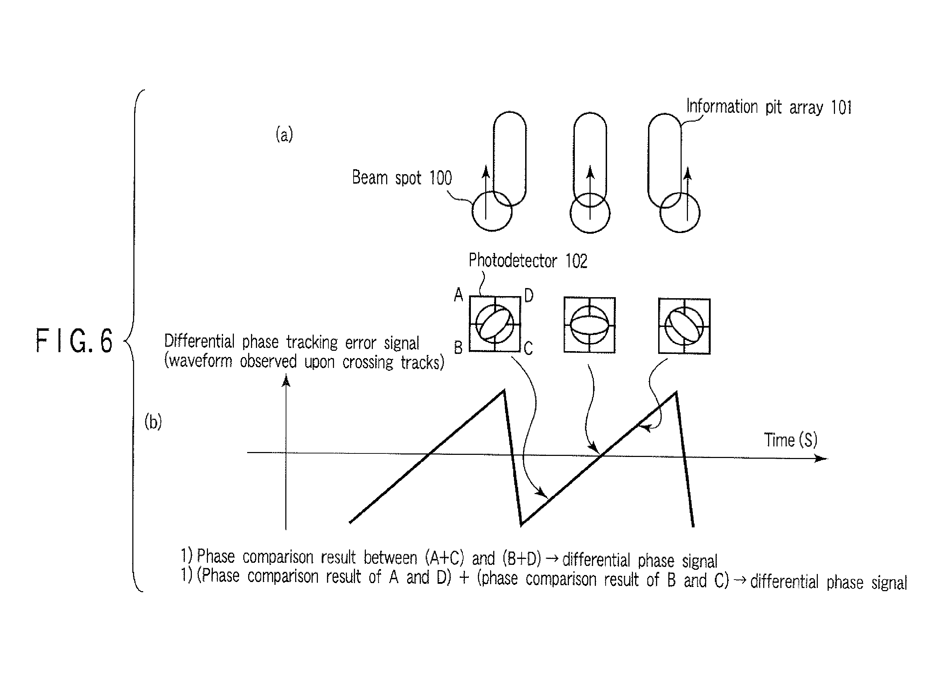

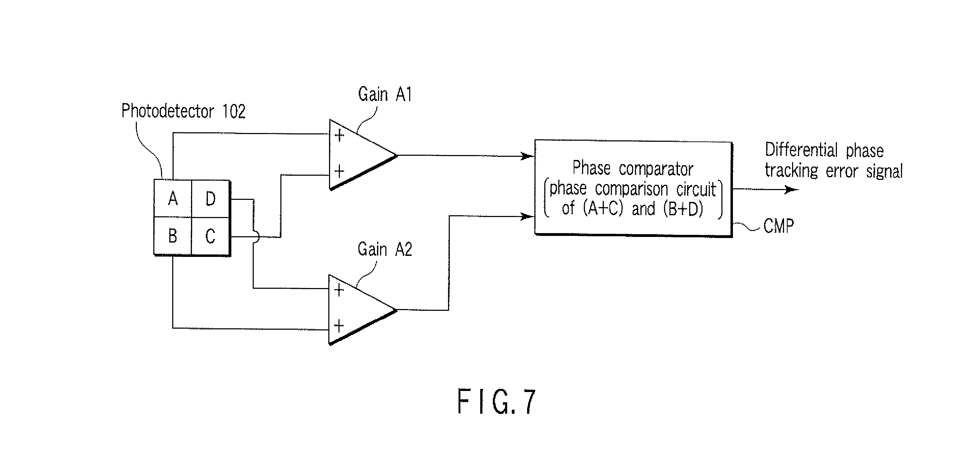

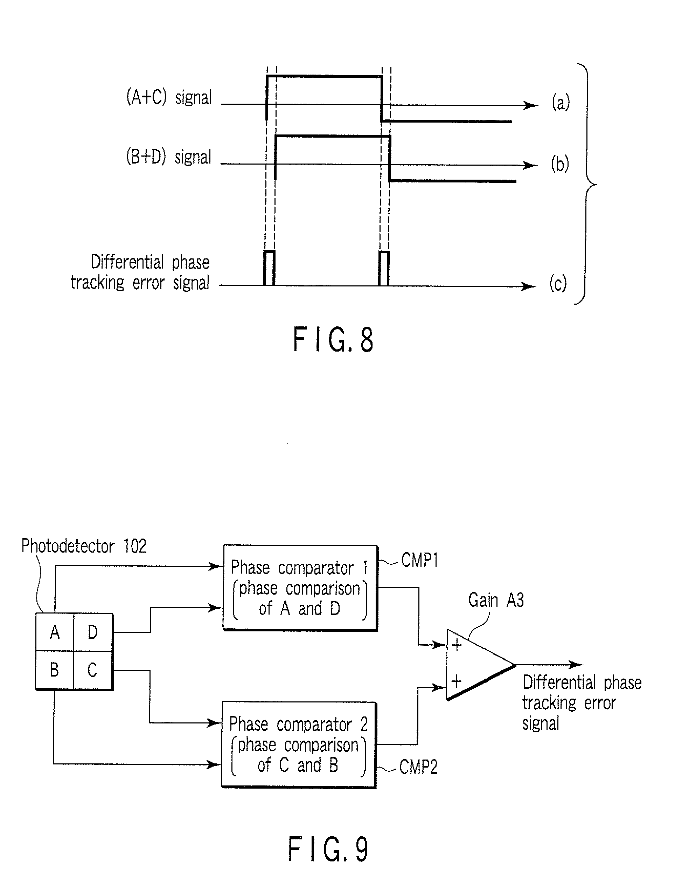

FIG. 6 is a view for explaining an example of a differential phase tracking error signal detected based on the phase difference of the 4-split photodetectors. FIG. 7 is a block diagram showing an example of the arrangement of a differential phase tracking error signal detection circuit. FIG. 8 shows an example of a differential phase tracking error signal detected by the detection circuit shown in FIG. 7. FIG. 9 shows another example of the differential phase tracking error signal detection circuit.

This differential phase tracking error signal is detected as follows. When beam spot 100 passes the center of information pit 101, the intensity distribution of return light on photodetectors 102 is symmetric, as shown in the central portion of FIG. 6. However, when beam spot 100 passes to be offset from the center of information pit 101, the return light intensity distribution on diagonally opposed photodetectors 102 (A to D) changes and becomes asymmetric, as shown in the right and left portions of FIG. 6. By utilizing this, the differential phase tracking error signal can be detected. More specifically, this detection process can be done by a DPD method.

In this DPD method, after signals from the diagonally opposed photodetectors (A to D) are added to each other, the two obtained signals are compared to obtain a phase difference, and that phase difference is used as a positioning error signal. This DPD signal can be processed by a processing circuit shown in FIG. 7. That is, the phases of a signal obtained by adding the outputs from diagonally opposed photodetectors A and C, and that obtained by adding the outputs from photodetectors B and D are compared by phase comparator CMP. This phase comparison result is used as a differential phase tracking error signal. More specifically, the differential phase tracking error signal is processed by a circuit (so-called charge pump circuit) which charges and detects the phase difference between signals (A + C) and (B + D) in, e.g., a capacitor, or the like.

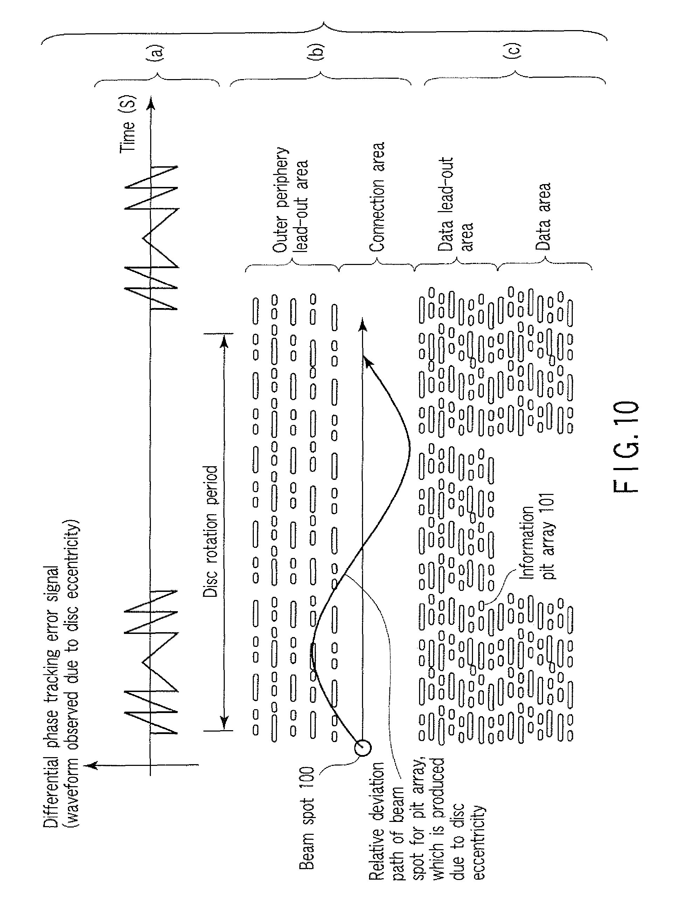

As a method different from FIG. 7, in place of adding diagonal components of the photodetectors, the phases of detection signals of neighboring photodetectors (A and D, B and C) are compared, and the comparison results may be added, as shown in FIG. 9. [Method of obtaining tilt error signal from differential phase tracking error signal of system lead-out area] FIG. 10 is a view for explaining another example of a differential phase tracking error signal detected due to eccentricity of an optical disc (when a beam spot traces an area other than a data area). When optical head 10 reaches a radial position where a system lead-out area (see FIG. 10(b)) of optical disc 1 is present, it waits for one rotation period of disc 1. In this case, if optical disc 1 mounted on the apparatus (disc drive) of FIG. 1 suffers eccentricity, and a beam spot passes the system lead-out area, a tracking error signal detected by positioning error detection circuit 19 is as shown in FIG. 10(a). The signal shown in FIG. 10 (a) is generated when a beam spot passes over the system lead-out area even for a part of a disc rotation period, and no problem is posed if it suffices to obtain a center value. If a tracking error signal shown in FIG. 10(a) is obtained, tilt signal detector 30 can sample it and can calculate an offset amount based on maximum and minimum values. Tilt control can be made using the calculated offset amount as a tilt error signal.

Note that FIG. 10(c) exemplifies the structure of a read-only optical disc (information is recorded by pits). However, even in a rewritable optical disc in which the data lead-out area and data area are formed by a land-groove structure, this signal detection for "tilt control or tilt compensation" can be similarly made.

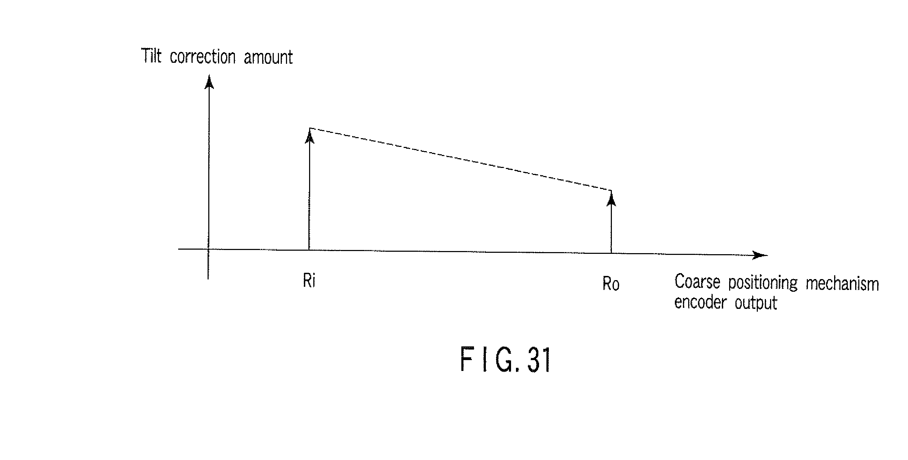

The aforementioned tilt control signal detection sequence can be executed at all radial positions independently of radial positions when the entire surface of optical disc 1 is formed of "pit arrays from which differential phase tracking error signals can be detected". Also, in case of an optical disc on which only some areas are formed of pit arrays, the tilt control signal detection sequence is executed on an area where pit arrays are formed, and a tilt compensation amount at a corresponding radial position can be stored in tilt compensation amount storage circuit 32. After that, a tilt compensation amount on a specific area on disc 1 where tilt control and detection of a tilt compensation amount cannot be made is preferably estimated and compensated for together with another means (e.g., by estimating the tilt correction amount profile with respect to a radial position) (this process will be described later with reference to FIG. 31 and the like).

The structures of target discs which are to undergo the tilt control according to the embodiment of the present invention will be described below.

FIG. 11 shows an example (single-sided/single-layer type) of an optical disc that can be used in the present invention. On a single-sided/single-layer disc, as shown in, e.g., FIG. 11, a system lead-in area is formed from the inner periphery side, and a connection area is formed outside the system lead-in area. A data lead-in area is formed outside the connection area. A data area is formed extensively outside the data lead-in area, and a data lead-out area is formed outside the data area. A connection area is formed outside the data lead-out area, and a system lead-out area is formed outside the connection area.

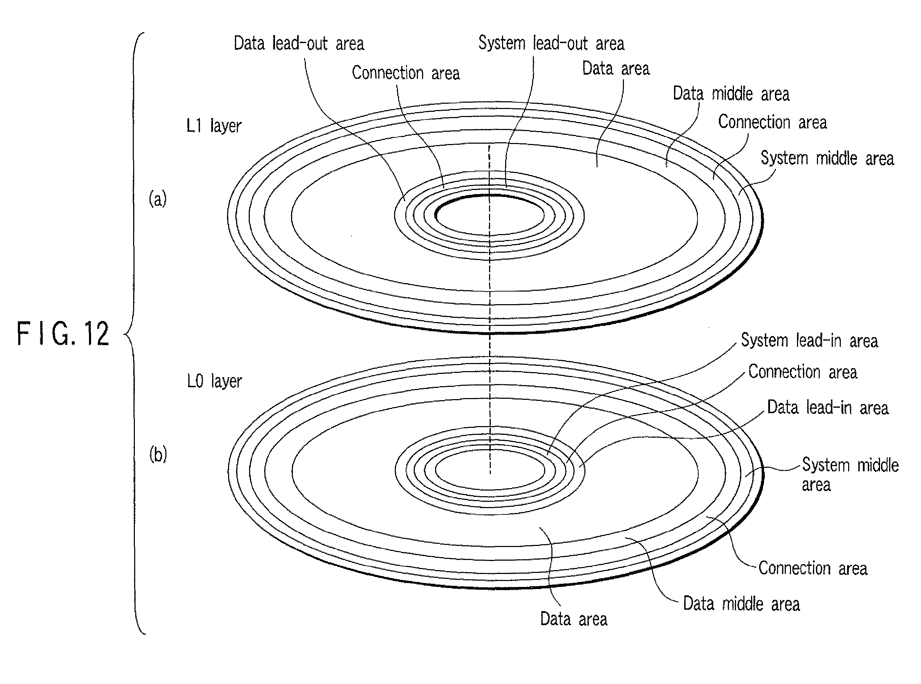

FIG. 12 shows another example (single-sided/double-layer type) of an optical disc that can be used in the present invention. On a first layer (L0 layer), which is formed on the side closer to the optical head, of a single-sided/double-layer disc, as shown in, e.g., FIG. 12(b), a system lead-in area is formed from the inner periphery side. A connection area is formed outside the system lead-in area, and a data lead-in area is formed outside the connection area. A data area of the first layer is extensively formed outside the data lead-in area, and a data middle area is formed outside the data area. A connection area is formed outside the data middle area, and a system middle area is formed outside the connection area.

On a second layer (L1 layer) of the single-sided/double-layer disc, as shown in, e.g., FIG. 12(a), a system middle area is formed from the outer periphery side, and a connection area is formed inside the system middle area. A data middle area is formed inside the connection area. A data area of the second layer is formed inside the data middle area, and a data lead-out area is formed inside the data area. A connection area is formed inside the data lead-out area, and a system lead-out area is formed inside the connection area.

In the example of FIG. 12, the L1 layer is formed on the disc inner side via a protection layer (or substrate) having a thickness of 0.1 to 0.6 mm. The L0 layer is formed below the L1 layer via a transparent adhesive layer (not shown) having a thickness on the order of several μm to several 10 μm. A substrate having a predetermined thickness is formed below the L0 layer so that the total disc thickness amounts to about 1.2 mm.

Note that two layers of the structure shown in FIG. 12 are formed on a transparent substrate having a thickness of about 0.6 mm, and another 0.6-mm thick substrate with the same structure is prepared. Furthermore, these substrates may be adhered to each other to form a 1.2-thick disc. In this case, a double-sided/double-layer (a total of four recording layers) disc can be formed.

Furthermore, as an extension of the structure shown in FIG. 12, for example, a "single-si-ded/n-layer disc" on which three or more recording layers are overlaid and formed on a single substrate can be formed.

[Disc structure and sequence]

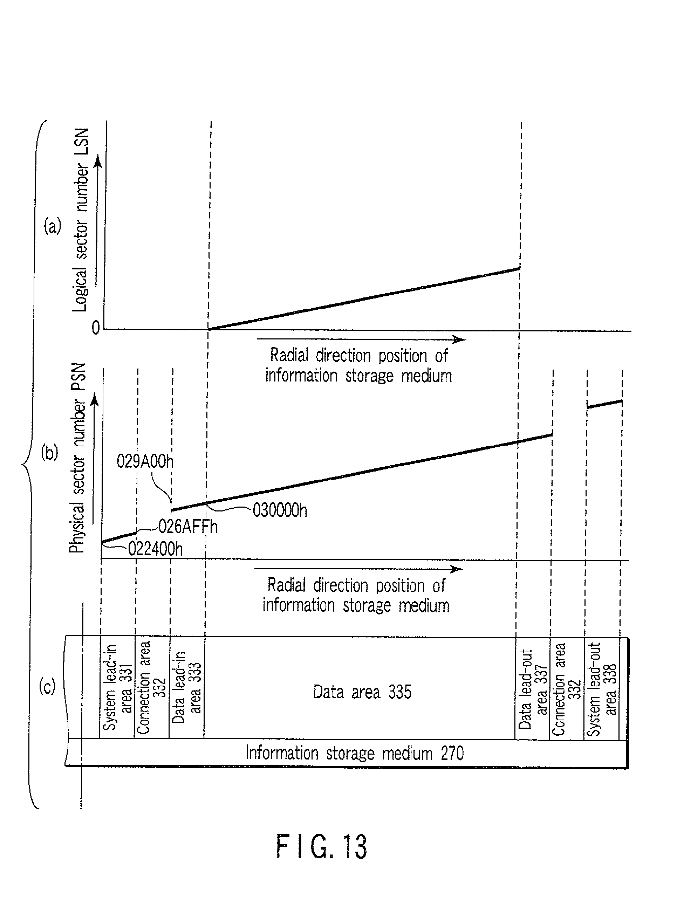

FIG. 13 shows an example of the configuration of a recording layer and the relationship between the physical and logical sector numbers of a single-sided/single-layer type read-only optical disc. As described above, in case of optical disc 1 (read-only information storage medium) on which the entire disc information recording surface is formed of pit arrays, tilt compensation by the tilt control can be made irrespective of radial positions. FIG. 13 shows the structure of such read-only information storage medium. A system lead-in area is formed on the innermost periphery side, and a data lead-in area is formed outside the system lead-in area via a connection area. Furthermore, a data area is formed outside the data lead-in area. On the read-only optical disc, since the data area is formed of pit arrays, the aforementioned tilt control sequence can be performed not only on the system lead-in area but also on the data area shown in FIG. 13.

Note that physical sector addresses of this data area are assigned numbers which monotonously increase in turn from the inner periphery side. The addresses are assigned to satisfy the monotone increase from the system lead-in area to the data area, and that from the data area to the system lead-out area. Note that logical sector numbers are assigned to only the data area, and they monotonously increase from the inner periphery toward the outer periphery.

In the structure of the read-only optical disc shown in FIG. 13, the data lead-out area is formed outside the data area, and the system lead-out area is formed outside the data lead-out area via the connection area. These connection area and system lead-out area on the outer peripheral portion are not necessary for tilt control especially in the read-only optical disc, but they form a necessary structure in terms of compatibility of a format with a rewritable optical disc (to be described later).

This system lead-out area is formed on an area from radial positions R-LO-I to R-LO-O, as shown in FIG. 11. Especially, R-LO-I is formed at a position of 58.0 mm or more in terms of the data capacity. The width of the connection area on the outer peripheral portion is specified by a spacing between R-DO-O and R-LO-O, and is preferably 0.3 mm or less to allow easy access to the system lead-out area (to be described later).

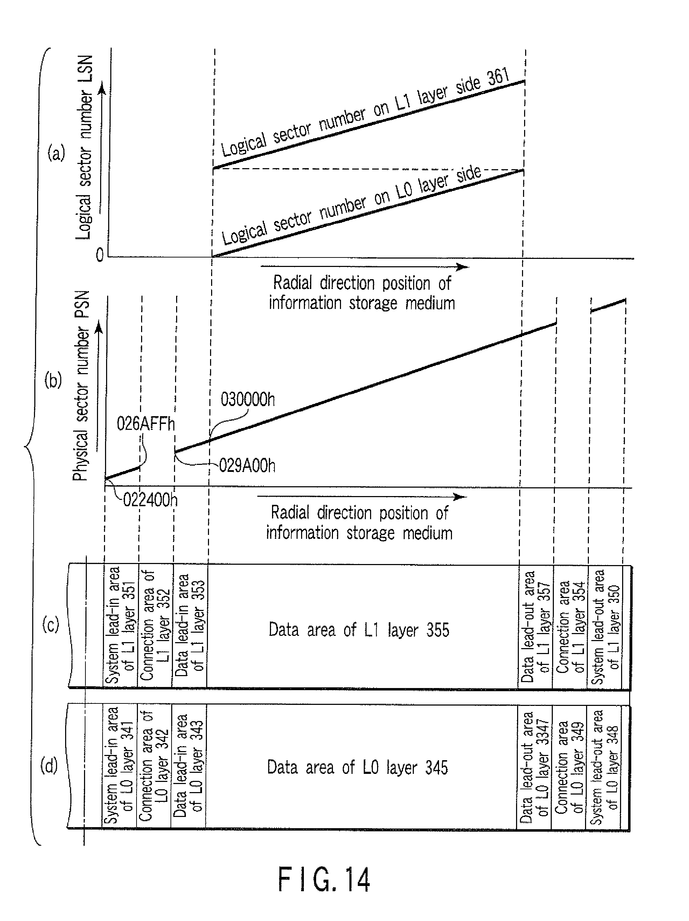

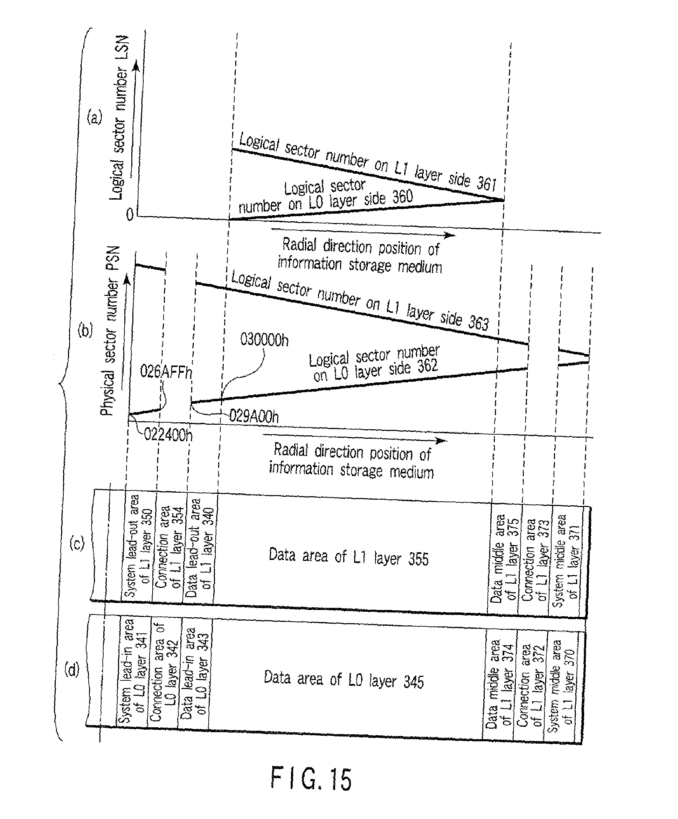

FIG. 14 shows an example of the configuration of a recording layer and the relationship between the physical and logical sector numbers of a single-sided/double-layer type (parallel layout) read-only optical disc. FIG. 15 shows an example of the configuration of a recording layer and the relationship between the physical and logical sector numbers of a single-sided/double-layer type (opposite layout) read-only optical disc.

On the single-sided/double-layer type read-only optical disc, as shown in FIG. 14 or 15, an L0 layer which is closer to the entrance surface of a beam spot and an L1 layer below the L0 layer have the same structures. Note that the configuration shown in FIG. 14 adopts the same address layout as that of the single-layer disc structure shown in FIG. 13. On the other hand, in the configuration of FIG. 15, the L0 layer has the same structure as in FIG. 13, but the L1 layer has an address layout, the inner and outer periphery sides of which are reversed.

In this single-sided/double-layer type configuration, as shown in, e.g., FIG. 12, the data middle area is formed on the outer peripheral portion of the L0 layer, and the system middle area of the L0 layer is formed outside the data middle area via the connection area. On the L1 layer, the data middle area of the L1 layer is formed outside the data area, and the system middle area is present outside the data middle area via the connection area. Furthermore, on the L1 layer, the data lead-out area is formed inside the data area, and the system lead-out area of the L1 layer is formed inside the data lead-out area via the connection area.

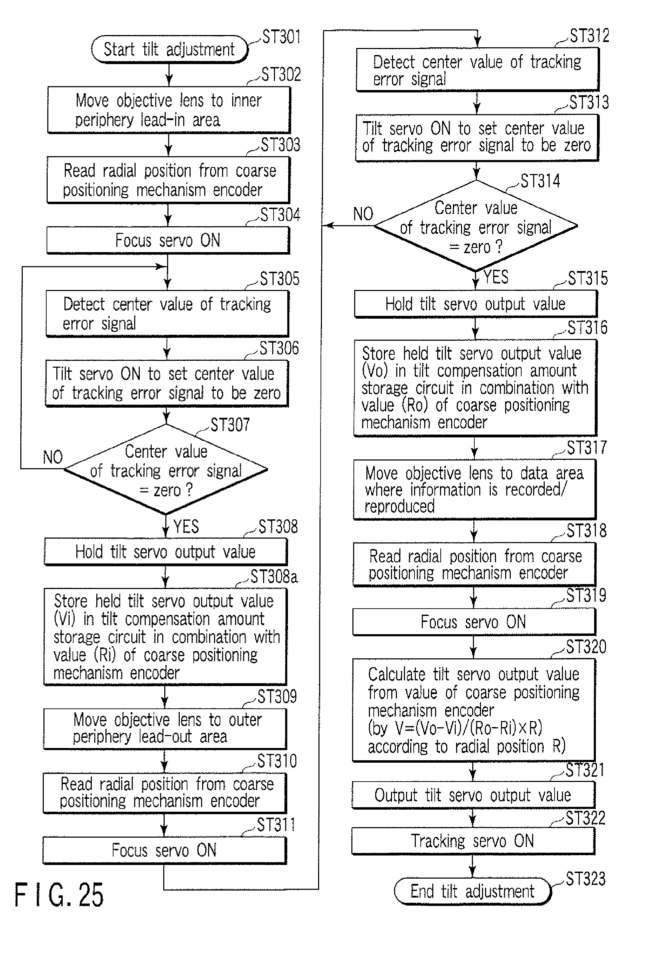

In the double-layer read-only optical disc with such structure, the tilt control can be made at an arbitrary radial position over the entire surface of disc 1. Even when the L0 and L1 layers have different tilt compensation amounts, tilt compensation amounts for each layer are stored in tilt compensation amount storage circuit 32 using combinations of some radial positions and the layer number, so that a tilt compensation amount at an arbitrary radial position can be estimated and calculated. An overview of this estimation calculation process will be described later with reference to FIG. 25 taking a single-layer optical disc as an example.

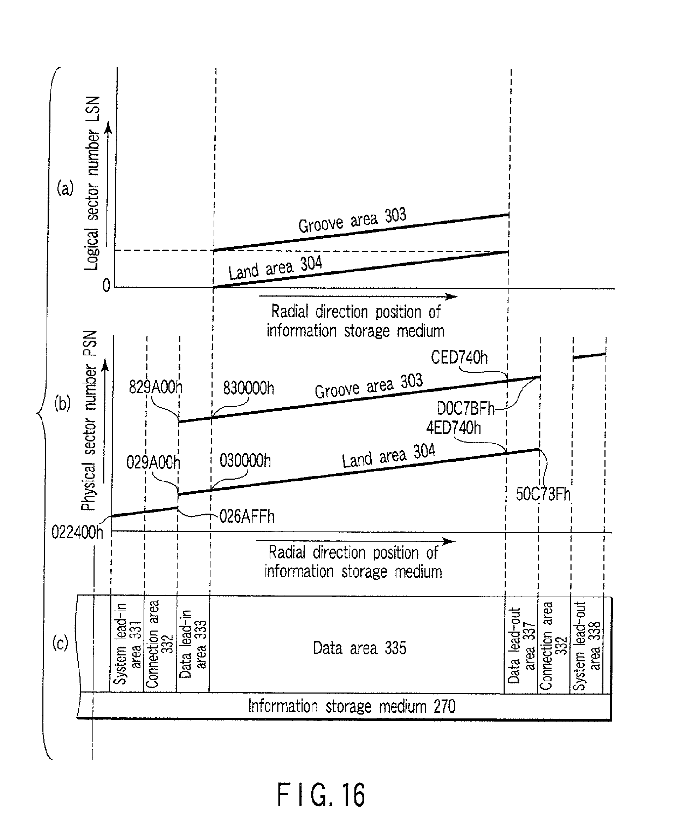

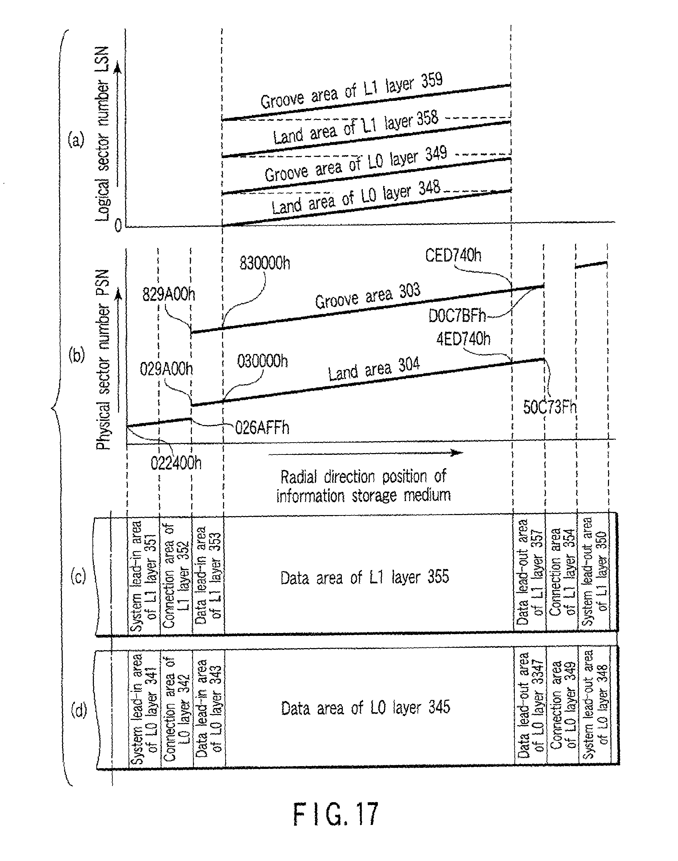

FIG. 16 is a view showing an example of the configuration of a recording area and the relationship between the physical and logical sector numbers of a single-sided/single-layer type rewritable optical disc (having a land-groove structure). FIG. 17 is a view showing an example of the configuration of a recording area and the relationship between the physical and logical sector numbers of a single-sided/double-layer type (parallel layout) rewritable optical disc (having a land-groove structure).

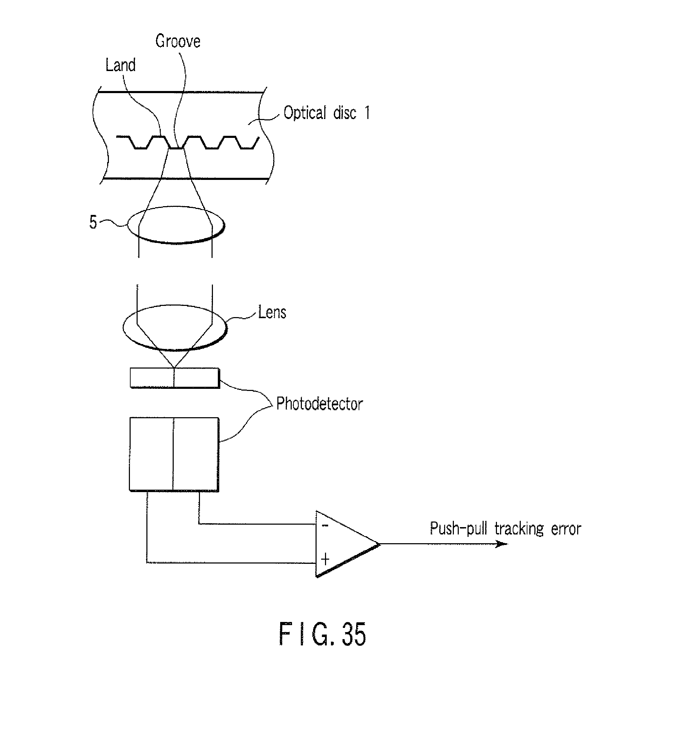

The single-layer and double-layer type rewritable optical discs have structures shown in FIGS. 16 and 17. Unlike in the read-only optical disc, the data lead-in area, data area, and data lead-out area are physically formed by land and groove areas. In this area (land or groove area), the aforementioned differential phase tracking error signal cannot be detected. Hence, a push-pull tracking error signal is obtained as the difference between the outputs from 2-split photodetectors by a detection system shown in FIG. 35 (to be described later), thus applying tracking control.

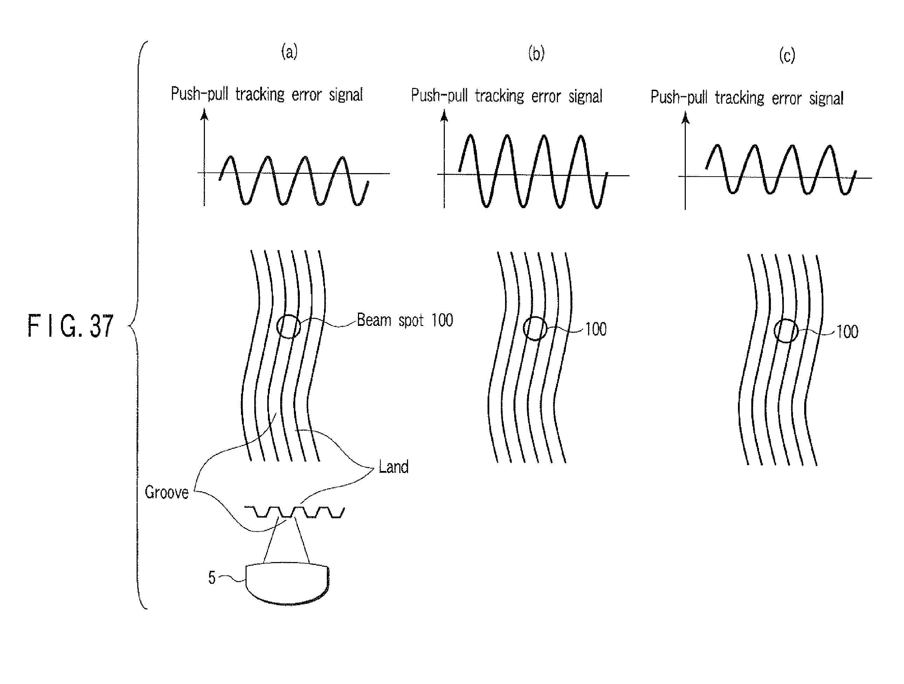

This push-pull tracking error signal also produces an offset in accordance with the tilt of a disc (as shown in FIG. 37 to be described later) like in the differential phase tracking error signal. However, this offset value is very small, and has too poor S/N to use in actual control (it is difficult to assure the S/N required for stable control). Hence, in the rewritable optical disc, tilt compensation amounts are obtained from only the "system lead-in area and system lead-out area" where the differential phase tracking error signal can be detected, and a tilt compensation amount at an arbitrary radial position is estimated using the relationship (profile) shown in, e. g., FIG. 31 on the basis of at least two stored tilt compensation amounts according to radial positions.

[Tilt error signal detection using offset amount]

The embodiment of the present invention uses an offset amount of a tracking error signal as a signal component which has high correlation to a relative tilt amount. A tracking error signal obtained due to the influence of eccentricity of a disc is sampled for a round of the disc while applying only focusing control, thus obtaining its center value. As a result, an offset amount which has high correlation to the relative tilt amount between optical disc 1 and objective lens 5 can be obtained. More specifically, the tracking error signal is sampled in an interval for one round of a disc, maximum and minimum values are obtained from sample values, and their median is determined as a tilt error signal. In this way, a signal for tilt control (tilt compensation) can be easily obtained.

The tilt error signal obtained in this way is a signal having correlation to the tilt of optical disc 1, as shown in FIGS. 3 to 5. Hence, the tilt control is applied to deviate lens actuator 6 in the tilt direction, so that this tilt error signal becomes zero. Note that the control frequency band of this tilt control is desirably about 1/10 of the rotational frequency of the disc if the detection cycle of the tilt error signal to be detected is the rotation period of the disc.

A practical tilt error signal detection sequence and tilt control sequence will be described below using FIG. 1. Optical disc 1 undergoes rotation control of spindle motor 2 at a predetermined rotational speed by spindle motor rotation control circuit 29 on the basis of the rotational angular velocity signal detected by encoder 28. In this state, reproduction light, which is obtained via objective lens 5 under the focusing control of focusing mechanism control circuit 22 in the system lead-in area, enters photodetector 9, and is input to positioning error detection circuit 19 via OP amplifier circuit 11.

This positioning error detection circuit 19 detects focusing and tracking errors by calculations. This positioning error amount is input to compensation controller 20 at discrete time intervals, e.g., at sampling intervals of 200 kHz, and compensation controller 20 inputs a signal which is phase-compensated based on the focusing error to focusing mechanism control circuit 22. A differential phase tracking error signal obtained in this state is input to eccentricity state determination circuit 33. If it is determined that optical disc 1 is mounted on spindle motor 2 in a eccentricity state, tilt signal detector 30 samples tracking error signals for a round of the disc. If the disc rotational speed is about 20 Hz, 10,000 tracking error signals which are sampled at 200 kHz are sampled.

The tracking error signal obtained in this way undergoes a filter process such as an LPF (Low Pass Filter) which removes slight noise components, and the maximum and minimum values of the tracking error signal are obtained, thus obtaining its median. This median is output to compensation controller 31 as a tilt error signal, and is then output to tilt adjustment mechanism control circuit 24 after it undergoes phase compensation and gain amplification. That is, tilt servo is applied so that this median becomes zero. The control frequency band at that time is about 2 Hz if the disc rotation period is 20 Hz and the sampling interval of the tilt error signal is also 20 Hz. Therefore, the tilt control to be implemented is control in a low-frequency band whose control frequency band approximately becomes 1/10 of the rotational frequency.

The tilt manipulation amount input to tilt adjustment mechanism control circuit 24 is input to a tilt compensation coil of triaxial lens actuator 6, thus tilting objective lens 5 in the radial tilt rotation direction.

[Optimization of sample point]

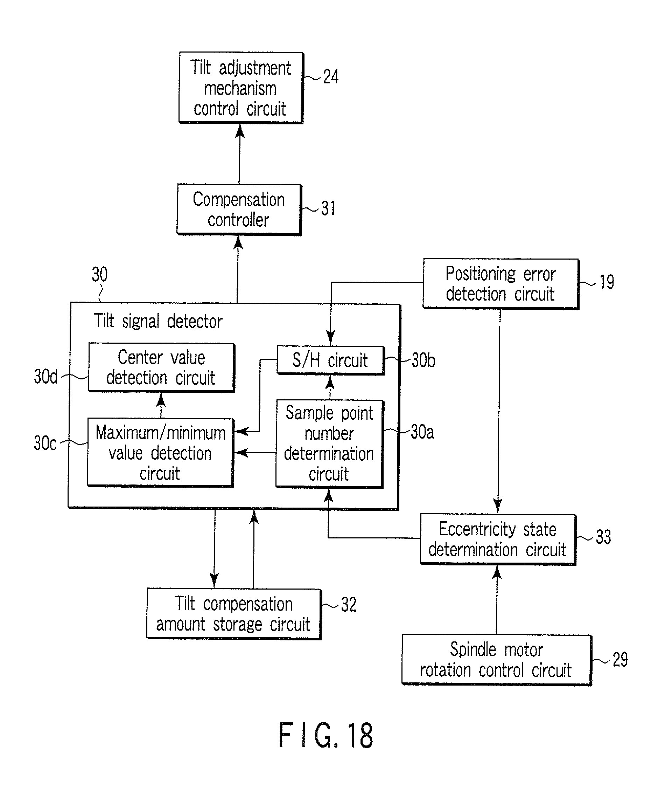

In the aforementioned sequence of "tilt error signal detection using an offset amount", 10,000 sample points are required to acquire a tilt error signal. If the eccentricity amount of optical disc 1 is large, a beam spot under only the focusing control passes over many tracks. Since the offset value (median in this case) of the tracking error signal can be detected in principle if a beam spot passes over at least one track, 10,000 sample points are not required. For example, sampling may be made during a time interval 1/N of the disc rotation period to obtain a median. Note that a center value is calculated from at least about 50 sample points, and N is preferably set to fall within the value range of 2 to 50. In this manner, the number of sample points is changed depending on the eccentricity state in measurement. This operation will be described below using FIGS. 18, 19, and 20.

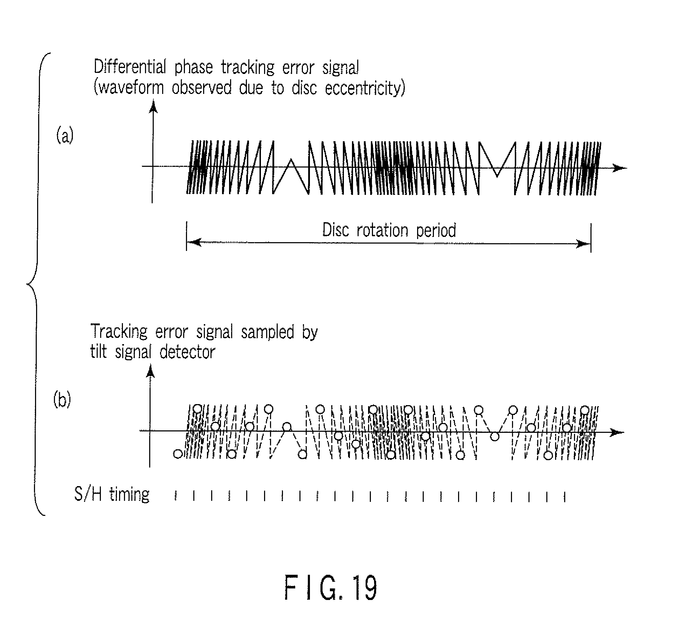

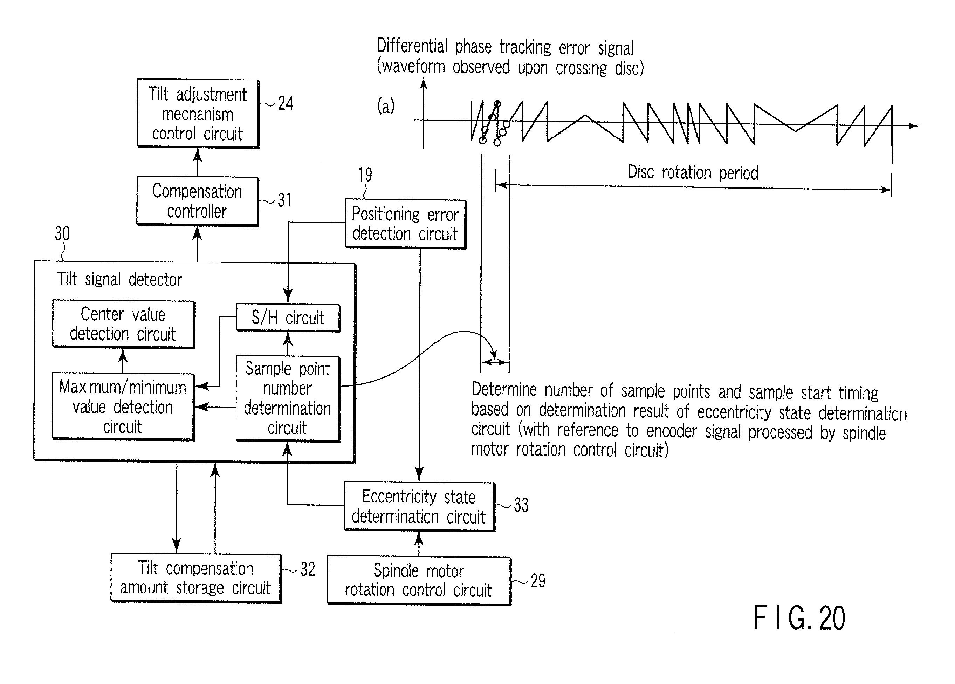

FIG. 18 is a block diagram showing an example of the arrangement (tilt signal detector 30 and its peripheral components) for detecting a differential phase tracking error signal which includes waveform components (FIG. 2 and the like) according to eccentricity of an optical disc. FIG. 19 shows an example of the relationship between a differential phase tracking error signal detected due to eccentricity of an optical disc, and a tracking error signal sampled by tilt signal detector 30 in FIG. 18. FIG. 20 is a view for explaining a differential phase tracking error signal (waveform observed upon passing over tracks) detected due to eccentricity of an optical disc.

The differential phase tracking error signal is detected by positioning error detection circuit 19 in FIG. 18, and is input to tilt signal detector 30 and eccentricity state determination circuit 33. Eccentricity state determination circuit 33 determines a eccentricity state on the basis of a rotation sync signal from spindle motor rotation control circuit 29. If a predetermined eccentricity amount or more is detected, circuit 33 issues an instruction to tilt signal detector 30 to sample signals for a period shorter than the disc rotation period and to detect a tilt error signal.

In tilt signal detector 30, upon reception of the instruction from eccentricity state determination circuit 33, sample point number determination circuit 30a determines the number of sample points, and sample-hold circuit 30b samples a tracking error signal output from positioning error detection circuit 19 a predetermined number of times. The sampled data undergo filtering using a predetermined LPF or the like and are input to maximum/minimum value detection circuit 30c to detect the maximum and minimum values. Subsequently, center value detection circuit 30d detects a center value from these maximum and minimum values.

The center value detected in this way is input to tilt adjustment mechanism control circuit 24 via compensation controller 31 to implement tilt servo. In this case, if sampling is made for one disc rotation period, a differential phase tracking error signal is sampled, as shown in FIG. 19. If sampling is made for one disc rotation period, as shown in FIG. 19, the center value of the differential phase tracking error signal can be detected. However, if the eccentricity amount is large, the maximum and minimum values can be sampled as long as sampling can be made for a part of the disc rotation period, as shown in FIG. 20. The magnitude of the eccentricity amount is determined by eccentricity state determination circuit 33. If the eccentricity amount of the disc is large, data in a part of the disc rotation period are sampled to shorten the sampling time for tilt amount detection. (The magnitude of the eccentricity amount can be determined based on the variation amount of the differential phase tracking error signal or by counting the number of <crossing center value> times, i.e., the number of times of zero-crossings of the differential phase tracking error signal within the disc rotation period.)

[When eccentricity is small]

On the other hand, if eccentricity state determination circuit 33 determines that the eccentricity amount is small, system controller 25 receives that information, and outputs a vibration manipulation amount to fine positioning mechanism control circuit 23 via compensation controller 20.

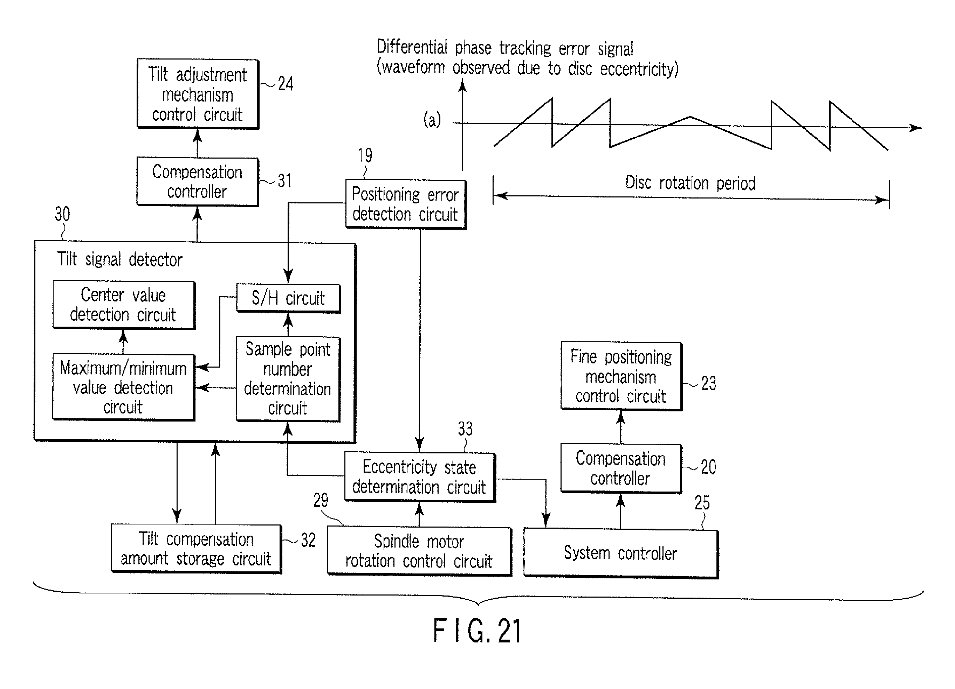

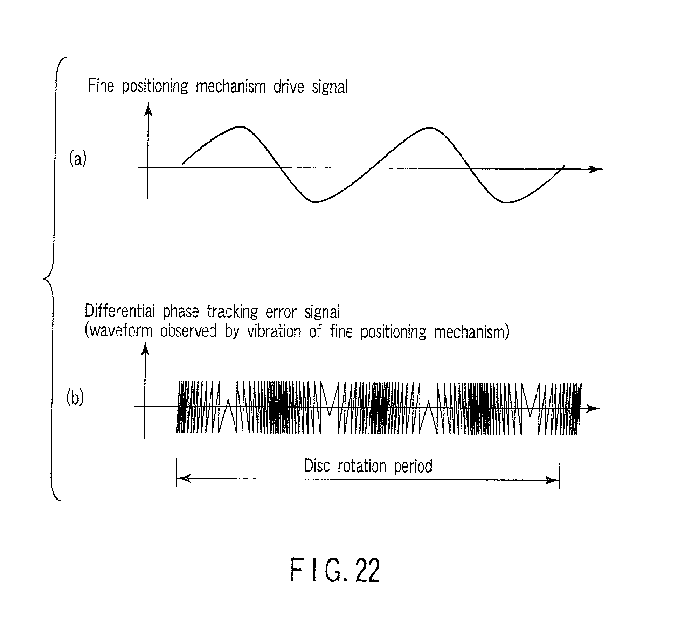

FIG. 21 shows another example of the arrangement for detecting a differential phase tracking error signal including waveform components according to eccentricity of an optical disc, and also an example of a differential phase tracking error signal detected by this arrangement. FIG. 22 shows an example of the relationship between a differential phase tracking error signal detected due to eccentricity of an optical disc and a fine positioning mechanism drive signal in the example of the arrangement shown in FIG. 21. As shown in FIG. 21 (a), when a differential phase tracking error signal varies only a predetermined amount or less even after an elapse of the disc rotation period timing, eccentricity state determination circuit 33 determines that the eccentricity amount is small, and applies a drive signal that drives the fine positioning mechanism to positively vibrate it. By applying a drive signal shown in FIG. 22(a) to fine positioning mechanism drive control circuit 23, objective lens actuator 6 as the fine positioning mechanism deviates in the tracking direction and, as a result, a differential phase tracking error signal shown in FIG. 22(b) is obtained.

More specifically, when a tracking error signal cannot be obtained or a variation amount of the tracking error signal is small even after the control waits for a disc rotation period on the basis of the output from encoder 28 of spindle motor 2, objective lens 5 is vibrated at, e.g., the eigenfrequency of lens actuator 6 in the tracking direction. At this time, if the eccentricity amount or phase of optical disc 1 has already been detected on the basis of the timing of encoder 28 of spindle motor 2, a manipulation amount is applied to fine positioning mechanism control circuit 23 to deviate objective lens 5 in a phase opposite to this eccentricity phase so as to deviate lens actuator 6 in the tracking direction, thus easily obtaining a differential phase tracking error signal, and consequently obtaining a tilt error signal.

[Acquire tilt error signal after it is normalized by tracking error signal amplitude]

The center value of the differential phase tracking error signal obtained in this way is used as a tilt error signal. However, it is desirable to use, as a tilt error signal, an offset signal obtained after normalizing the amplitude value of the tracking error signal. By obtaining the offset value after normalization using the amplitude, a tilt error signal with a high S/N can be detected.

As shown in FIG. 4(b), when the relative tilt amount between optical disc 1 and objective lens increases, the amplitude of a tracking error signal is prone to decreases. That is, the amplitude of the tracking error signal decreases while being offset with increasing relative tilt amount. Hence, by normalizing the amplitude of the tracking error signal acquired by tilt signal detector 30, a more appropriate offset value can be obtained. When tilt control is made using this offset value, more adequate tilt adjustment can be done.

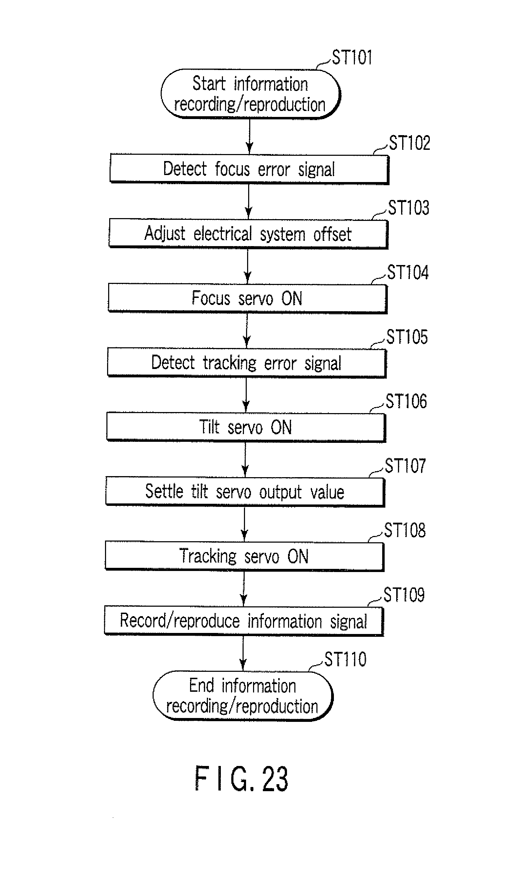

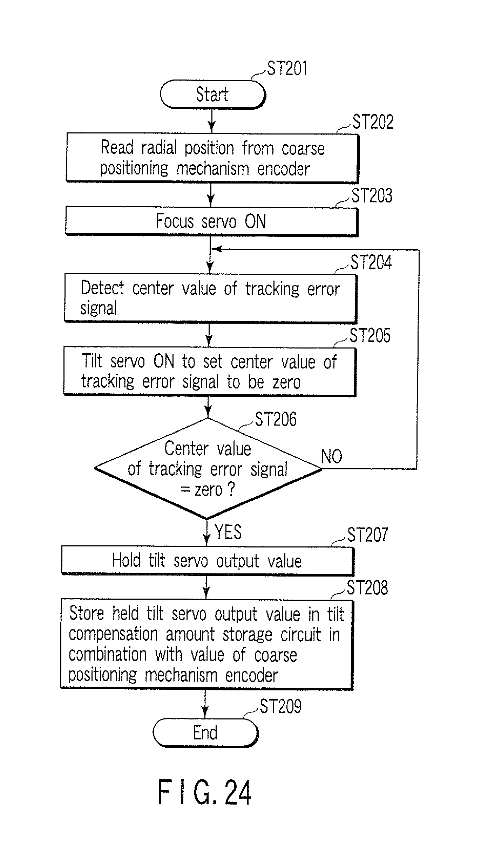

FIG. 23 is a flowchart for explaining the servo sequence of the optical disc apparatus according to the embodiment of the present invention. This servo sequence is used in the control method used upon recording or reproducing information on optical disc 1 using optical head 10, which is controlled by a control system including the focusing control, tracking control, and tilt control. In this method, focusing control that focuses spot 100 of a laser beam output from optical head 10 on a given track of optical disc 1 is executed (steps ST102 to ST104). A tracking error signal (differential phase tracking error signal in FIG. 3 or the like) corresponding to a positional deviation (position error) between focused beam spot 100 and the target track is detected (step S105). Tilt control that deviates a tilt as a relative tilt between optical disc 1 and objective lens 5 is made (steps ST106 and ST107) on the basis of the detection result of the tracking error signal (steps ST204 to ST206 in FIG. 24, and the like). After that, tracking control is made based on the detection result of the tracking error signal (step ST108).

The sequence in FIG. 23 including the focusing control, tilt control, and tracking control in the system lead-in area of optical disc 1 can be summarized as follows. Target disc (individual disc mounted on the apparatus) 1 is checked. Or system controller 25 generates an information reproduction/recording request to reproduce information required to check mounted disc 1 (step ST101). Upon reception of this request, focusing mechanism control circuit 22 in FIG. 1 detects a focusing error signal (step ST102), adjusts an electrical offset (step ST103), and then implements focusing control (step ST104). A tracking error signal is detected as a differential phase tracking error signal in the system lead-in area (step ST105), and a tilt error signal is calculated from this signal to apply tilt servo (step ST106). A tilt compensation amount obtained by this tilt servo is settled as an output value (step ST107), and the output value of this tilt compensation amount is stored in tilt compensation amount storage circuit 32 in FIG. 1. After that, tracking servo is applied (step ST108), and an information signal is reproduced or recorded in a stable tracking state (step ST109).

FIG. 24 is a flowchart for explaining the tilt adjustment sequence (an example of storing an adjustment value by applying tilt servo according to the radial position of a disc) according to the embodiment of the present invention. FIG. 24 shows details of the sequence for storing a tilt compensation amount from tilt servo applied upon movement of optical head 10.

A tilt adjustment start command is issued when tilt servo is applied for the first time (step ST106 in FIG. 23) after disc 1 is mounted on the apparatus in FIG. 1. In response to this command, the process in FIG. 24 starts (step ST201). After this process starts, the radial position of optical head 10 is read from encoder 21 of seek motor 12 (step ST202). Tilt signal detector 30 in FIG. 1 detects the center value of a differential phase tracking error signal from the differential phase tracking error signal obtained (step ST204) after focusing servo is applied (step ST203). This center value is used as a tilt error signal, and a manipulation amount of a tilt coil (not shown) of triaxial lens actuator 6 is output so that this error signal becomes zero (step ST205). As a result, if the center value of the differential phase tracking error signal assumes a zero-neighboring value (YES in step ST206), an output value at that time is held as a tilt compensation amount (step ST207). At the same time, the held tilt compensation amount is stored in tilt compensation amount storage circuit 32 in FIG. 1 in combination with the output from encoder 21 of seek motor 12 (step ST208).

On the other hand, if the center value of the differential phase tracking error signal does not assume a zero-neighboring value (NO in step ST206), an operation for acquiring and adjusting a differential phase tracking error signal is indispensable. In this case, the flow returns to the differential phase tracking error signal detection step (step ST204) to acquire a tilt error signal again. After that, the processes in steps ST204 to ST206 are repeated until the center value of the differential phase tracking error signal assumes a zero-neighboring value. If the center value of the differential phase tracking error signal assumes a zero-neighboring value, a tilt servo output value at that time is used (step ST207), and tilt compensation information for disc 1 currently mounted on the apparatus is stored in tilt compensation amount storage circuit 32 (step ST208).

Single-layer and double-layer type optical discs 1 according to the embodiment of the present invention have the structure shown in FIGS. 16 and 17. Unlike in the read-only optical disc, the data lead-in area, data area, and data lead-out area are physically formed by land and groove areas. In this land/groove area, the aforementioned differential phase tracking error signal cannot be detected. Hence, a push-pull tracking error signal is obtained as the difference between the outputs from 2-split photodetectors by a detection system shown in FIG. 35, thus applying tracking control. This push-pull tracking error signal also produces an offset in accordance with the tilt of a disc, as shown in FIG. 37 like in the differential phase tracking error signal. However, this offset value is very small, and has too poor S/N to use in actual control.

Hence, in rewritable optical disc 1, tilt compensation amounts are calculated in the "system lead-in area and system lead-out area" where a differential phase tracking error signal can be detected with a relatively high S/N, and a tilt compensation amount at an arbitrary radial position is estimated using the relationship (profile) shown in FIG. 31 on the basis of at least two stored tilt compensation amounts according to radial positions. An overview of a calculation process for this estimation will be explained below using FIG. 25 taking the process for a single-layer optical disc as an example.

FIG. 25 is a flowchart for explaining the tilt adjustment sequence (an example of storing tilt servo adjustment values of lead-in and lead-out areas of a disc, and using a value calculated from the stored adjustment values for tilt servo of a data area between the lead-in and lead-out areas) according to another embodiment of the present invention.

If system controller 25 in FIG. 1 receives a tilt adjustment start command, optical head 10 moves to form a beam spot on the system lead-in area on the inner periphery side (step ST302). The disc radial position of this beam spot is roughly estimated from the output of encoder 21 of seek motor 12 (step ST303), and the focusing control is started for the information recording surface of optical disc 1 which undergoes the rotation control of spindle motor 2 (step ST304). As a result, a differential phase tracking error signal is obtained. After that, the tilt servo is applied using the center value of the obtained differential phase tracking error signal (steps ST305 to ST307) to hold an output (step ST308), and the held output is stored in the tilt compensation amount storage circuit (step ST308a).

Next, optical head 10 moves to form a beam spot on the system lead-out area (step ST309). A differential phase tracking error signal is obtained (steps ST310 and ST311) in the same manner as in the system lead-in area, and the tilt servo is applied to hold an output (steps ST312 to ST315), thus storing the held output in the tilt compensation amount storage circuit (step ST316).

In this way, if tilt compensation amounts at least at two disc radial positions are stored (steps ST308a and ST316), a tilt compensation amount at an arbitrary radial position where information is to be recorded/reproduced can be appropriately estimated by the process in step ST320 using a radial position read from seek motor encoder 21 (steps ST317 to ST319). If the tracking servo is applied based on the tilt compensation amount estimated in this way (steps ST321 and ST322), accurate recording or reproduction can be made on each individual high-density disc mounted on the apparatus while avoiding the influence of tilt.

Note that the tilt compensation amount storage processes (steps ST308a and ST316) which are executed in advance need only be executed for other two or more points in place of two points on the system lead-in area and system lead-out area. As in the read-only optical disc, when target disc 1 is a two-layer disc, the tilt compensation amount storage circuit stores tilt compensation amounts for each layer as combinations of disc radial positions and layer numbers, thus estimating and calculating a tilt compensation amount at an arbitrary disc radial position.

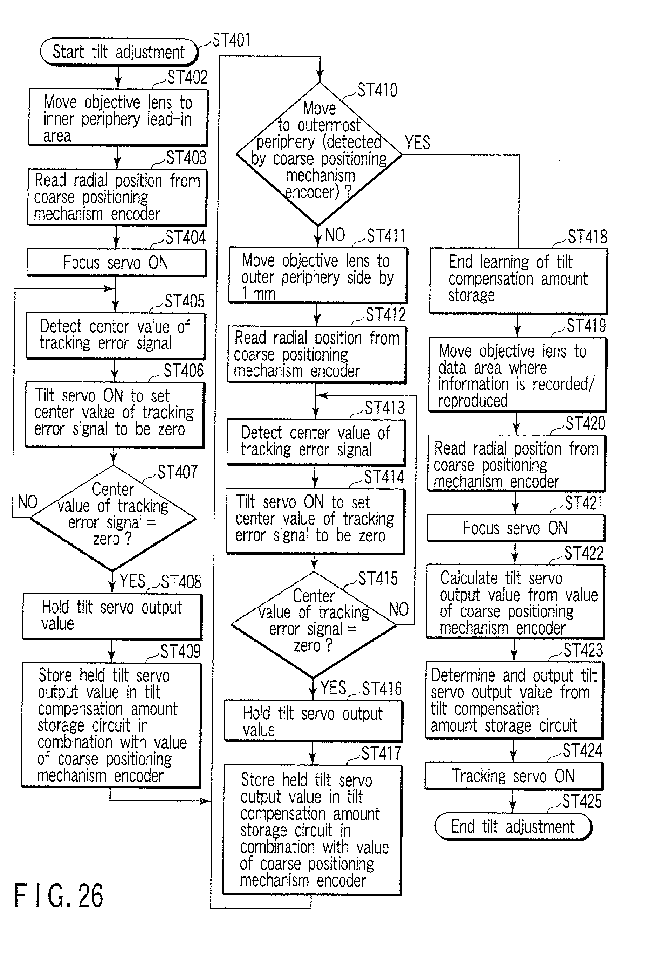

FIG. 26 is a flowchart for explaining the tilt adjustment sequence (an example of storing tilt servo adjustment values of a lead-in area and outer periphery of a disc, and using a value calculated from the stored adjustment values for tilt servo of a data area between the lead-in area and outer periphery) according to still another embodiment of the present invention. An overview of the process for estimating and calculating a tilt compensation amount at an arbitrary radial position will be explained below taking single-layer optical disc 1 as an example.

If system controller 25 receives a tilt adjustment start command, optical head 10 moves to form a beam spot on the system lead-in area on the inner periphery side of disc 1 (step ST402). The disc radial position of this beam spot is roughly estimated from the output of encoder 21 of seek motor 12 (step ST403), and the focusing control is started for the information recording surface of optical disc 1 which undergoes the rotation control of spindle motor 2 (step ST404). As a result, a differential phase tracking error signal is obtained. The tilt servo is applied using the center value of the obtained signal (steps ST405 to ST407) to hold an obtained output after this tilt servo becomes stable (step ST408), and the held output is stored in the tilt compensation amount storage circuit (step ST409).

Next, the beam spot is moved toward the outer periphery side (it has not reached the outermost periphery yet) (NO in step ST410). In this case, optical head 10 is moved to deviate a beam spot in increments of, e.g., 1 mm toward the outer periphery of the disc (step ST411), and the same tilt compensation amount storage operation as in the above description is executed (steps ST412 to ST417).

Since the beam spot moves in small steps to the disc outer periphery, it moves to the data lead-in area formed outside the system lead-in area. On the read-only optical disc, a differential phase tracking error signal can be obtained from the data area in the same manner as in the system lead-in area, and a tilt compensation amount can be obtained in the same sequence. (Note that the system lead-in area and data area have opposite detection polarities and correction is required.)

When optical head 10 sequentially moves toward the disc outer periphery side in increments of 1 mm, and if it is determined that the beam spot has reached a position near the system lead-out area at the outermost periphery (YES in step ST410), the learning operation of tilt compensation amount storage circuit 32 ends (step ST418), and the beam spot is moved to a target position where information is to be reproduced (step ST419). If the beam spot has reached the target position, the value of encoder 21 of seek motor 12 is read out (step ST420) to apply focusing control (step ST421), and a "tilt compensation amount" corresponding to the value of this seek motor encoder 21 or its neighboring value is calculated from those which are stored in tilt compensation amount storage circuit 32 (step ST422), thereby performing tilt compensation. After this tilt compensation amount is output (step ST423), tracking control starts (step ST424). The tilt control sequence of the read-only optical disc has been exemplified.

[Tilt servo and DC compensation after compensation amount storage]

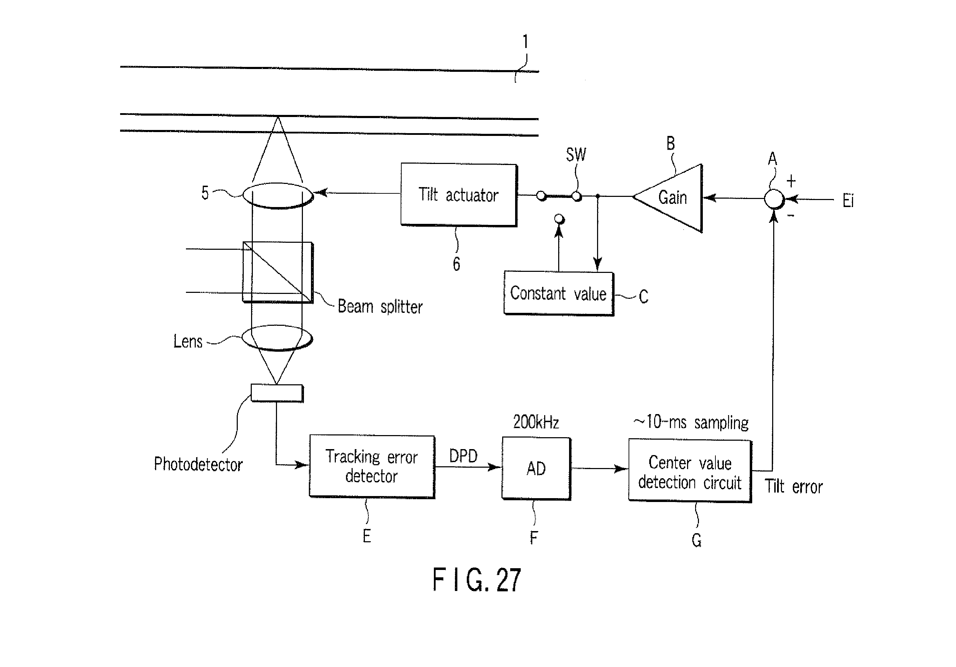

As described above, the tilt servo is applied using the tilt error signal obtained as described above before the tracking control. This tilt servo sequence will be explained below using the arrangement shown in FIG. 27.

FIG. 27 is a block diagram showing an example of the arrangement that attains tilt adjustment using tilt adjustment values stored in the sequence shown in FIGS. 24 to 26 and the like. Tracking error detector E (corresponding to, e.g., A1, A2, and CMP in FIG. 7) detects a DPD signal as a differential phase tracking error signal from the detection outputs of a photodetector (corresponding to, e.g., 102 in FIG. 7). This DPD signal is converted into digital data by A/D converter F, e.g., at a sampling frequency of 200 kHz and the number of quantization bits of about 8 to 16.

The signal amplitude of the digital differential phase tracking error signal converted by A/D converter F is sampled at intervals of, e.g. ,10 msec, by center value detection circuit G. From the maximum and minimum values of the sampled amplitude data, its median is detected as a "tilt error". This tilt error signal is compared with target value $E_i$ ($E_i = 0$ in this case) of tilt servo by comparator A. The difference between target value $E_i$ and the tilt error (the center value of the detected differential phase tracking error signal) is amplified by gain element B, and is input to the tilt coil of triaxial objective lens actuator 6. Such closed loop operation of tilt servo applies servo so that the center value of the differential phase tracking error signal becomes zero (to converge to target value $E_i = 0$ of tilt servo).

The "tilt control in a low control band" is implemented so that this tilt error signal (the center value of the differential phase tracking error signal) assumes a value in the neighborhood of zero. When the tilt error signal assumes a value in the neighborhood of zero, a tilt control signal input to triaxial objective lens actuator 6 holds its manipulation amount. That is, if it is determined due to a decrease in variation of the center value by center value detection circuit G that the "tilt servo operation is stable", the manipulation amount (constant value) output from gain element B at that time is stored and held by output value storage circuit C. With this hold process, a tilt compensation amount at the predetermined radial position where this tilt control is made is settled. At this radial position, the settled tilt compensation amount is input to triaxial objective lens actuator 6 as a tilt manipulation amount unless currently mounted optical disc 1 is detached from the apparatus (disc drive).

If this settled tilt compensation amount is that for the system lead-in area, its polarity is inverted to obtain a compensation amount at a radial position of the system lead-in area, i.e., a value corresponding to the output from encoder 21 of seek motor 12, and that value is stored in tilt compensation amount storage circuit 32.
After the tilt servo is implemented, if optical head 10 moves to this radial position and the tilt servo must be applied again, the manipulation amount (stored in output storage circuit C) stored in tilt compensation amount storage circuit 32 is selected by switch SW, and is output to tilt actuator 6.

[Start of tracking control and sequence]

With the control sequence of the arrangement shown in FIG. 27, objective lens 5 in FIG. 1 undergoes the focusing control and tilt control. In this state, the tracking error signal detected by positioning error detection circuit 19 in FIG. 1 is input to compensation controller 20. Then, compensation controller 20 outputs the manipulation amount to fine positioning mechanism control circuit 23 and coarse positioning mechanism control circuit 17 which perform positioning in the tracking direction. In this way, track lead-in control is executed at a timing suited to the tracking control, and the tracking control starts.

During the tracking control of triaxial lens actuator 6, the tilt compensation amount is held and output by tilt compensation amount storage circuit 32 unless objective lens 5 largely deviates from the radial position where the tilt compensation amount of the tilt control has been adjusted.

The sequence of the focusing control, tilt control, and tracking control in the system lead-in area formed near the innermost periphery of optical disc 1 has been described. FIG. 23 above summarizes this sequence.

[Access method to system lead-out area]

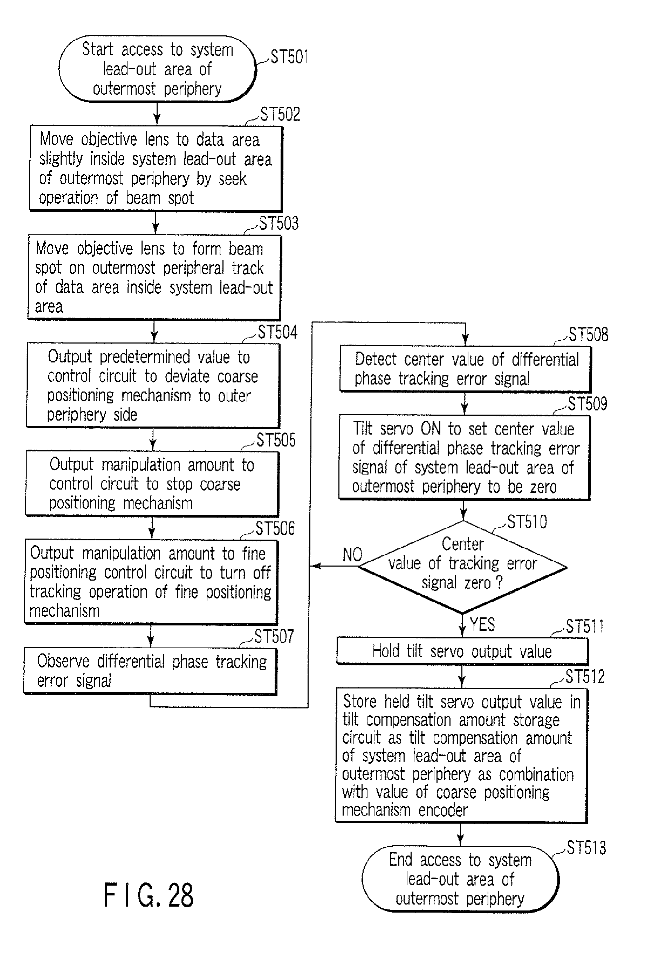

In the aforementioned example, a beam spot must be positioned on the system lead-out area to obtain a tilt compensation amount. An example of the access sequence to the system lead-out area upon deviating a beam spot to the system lead-out area will be described below with reference to FIGS. 1 and 28.

FIG. 28 is a flowchart for explaining an example of the access sequence to a system lead-out area at the outermost periphery of a disc. Coarse access is made to deviate optical head 10 using seek motor 12 toward a radial position where the system lead-out area is present. With this coarse access, optical head 10 is slowly moved while managing the position by encoder 21 provided to seek motor 12, thus moving a beam spot toward the data area on the slightly inner periphery side of the system lead-out area or the system lead-out area (step ST502). At this time, the focusing control is kept ON, and the tracking control is OFF since the seek operation is in progress.

If optical head 10 is controlled to deviate by seek motor 12 to a position where a beam spot is formed on the data area on the slightly inner periphery side of the system lead-out area, a tracking error signal is input to compensation controller 20 at an appropriate timing while observing the tracking error signal detected by positioning error detection circuit 19, and a manipulation amount is input to fine positioning mechanism control circuit 23 and coarse positioning mechanism control circuit 17 to start track lead-in control, thus applying tracking control.

At this time, as for the tilt control manipulation amount, when a tilt compensation amount at a radial position of the target disc has already been stored in tilt control manipulation amount storage circuit 32, this compensation amount is output to compensation controller 31. This compensation amount undergoes phase compensation by compensation controller 31, and is input to tilt adjustment mechanism control circuit 24. Then, lens actuator 6 positions objective lens 5 in the radial tilt direction. When no compensation amount for the target disc is stored in tilt compensation amount storage circuit 32, a compensation amount on the system lead-in area is output as a temporary output.

After the tracking control is applied, since the physical address of the position where the beam spot is formed is detected, access control circuit 18 controls fine positioning mechanism control circuit 23 via compensation controller 20 to deviate lens actuator 6, so as to form a beam spot at an outermost peripheral track or a track one track before outermost peripheral track of the data area using this physical address information. In this way, the beam spot moves by track jump for each track (step ST503).

If the beam spot has reached a track at the outermost peripheral track or a track one track before outermost peripheral track of the data area, a DC input is applied to coarse positioning mechanism control circuit 17 to deviate only seek motor 12 further to the outer periphery side while the tracking control is ON (step ST504). As a result, objective lens 5 deviates to shift to the slightly inner periphery side from a neutral position in the tracking direction, contrary to the movement of optical head 10 by seek motor 12. The DC output value to seek motor 12 is adjusted while observing a shift amount that allows objective lens 5 to shift toward the inner periphery side from the neutral position. This shift amount can be estimated and observed using the output amount of fine positioning mechanism control circuit 23 input to lens actuator 6, i.e., a DC component of the tracking manipulation amount.

After the state wherein objective lens 5 shifts to the slightly inner periphery side from the neural position is realized in this way, the DC output to seek motor 12 is stopped to stop seek motor 12 (step ST505), and the tracking control is turned off (step ST506). Furthermore, simultaneously with the tracking control OFF, detection of the aforementioned DPD signal detection method starts as the tracking error detection method in positioning error detection circuit 19 (step ST507). At this time, objective lens 5 deviates toward the outer periphery side in an attempt to return to the neutral position at the eigenfrequency of lens actuator 6. That is, a beam spot moves to the system lead-out area, which is present on the outer periphery side than the outermost periphery of the data area, by the adjustment deviation amount. The deviation amount at that time never exceeds a maximum deviation amount of objective lens actuator 6 in the tracking direction.

In general, a deviation amount which is guaranteed as the movable range of objective lens actuator 6 without lowering the quality of a reproduction signal is at most about 0.3 mm. In order to allow a beam spot to reach the system lead-out area via the connection area within this deviation amount, the connection area (see FIGS. 10 to 12) is preferably set to be 0.3 mm or less.

When the beam spot has reached the system lead-out area, since this system lead-out area is formed of pit arrays, a tracking error signal detected as a DPD signal is obtained by positioning error detection circuit 19 in the same manner as in the system lead-in area. This tracking error signal offsets to have correlation with the relative tilt between optical disc 1 and objective lens 5. Hence, tilt signal detector 30 samples a differential phase tracking error signal to measure its offset center value with the same sequence as described above (step ST508), thereby obtaining a tilt error signal. When this tilt error signal is obtained, tilt adjustment mechanism control circuit 24 implements tilt control based on this signal using the same sequence as described above (steps ST508 to ST510). A tilt compensation amount is held as that on the system lead-out area (step ST511), and is stored in tilt compensation amount storage circuit 32 after its polarity is inserted as in the system lead-in area (step ST512).

When information on the system lead-out area need not be reproduced, and a tilt compensation amount on the system lead-out area need only be acquired, only the following sequence for acquiring the offset amount of the tracking error signal on the system lead-out area can be executed.

[Access method to system lead-out area when only tilt adjustment is made on system lead-out area]

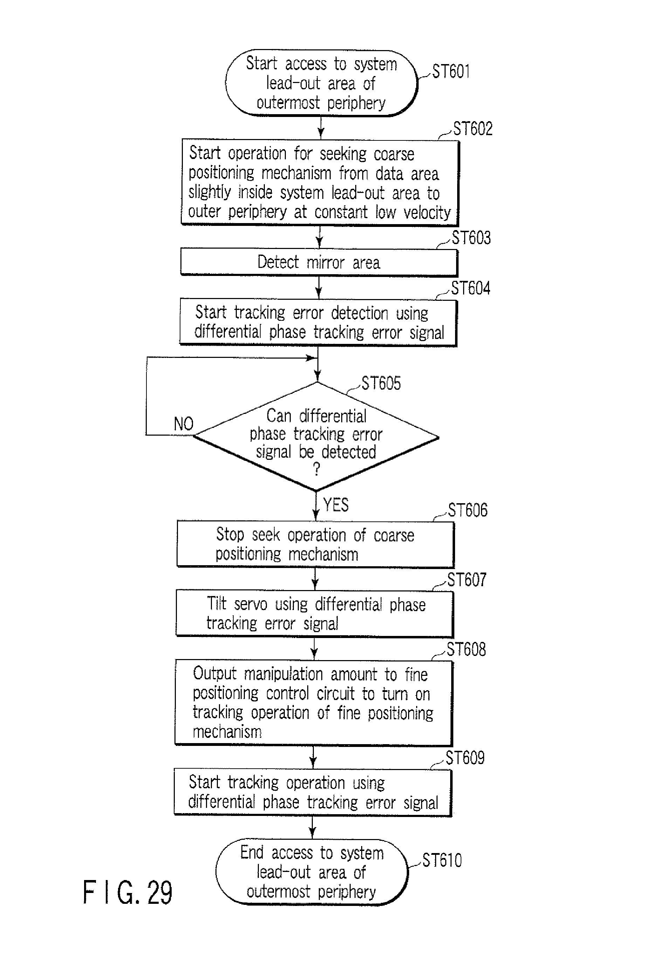

FIG. 29 is a flowchart for explaining another example of the access sequence to a system lead-out area at the outermost periphery of a disc. In the sequence shown in FIG. 29, optical head 10 is slowly moved by seek motor 12 to the outer periphery side while the tracking control is OFF and only the tracking control is applied with the objective lens located at the neutral position in the tracking direction (step ST602). At this time, if objective lens 5 is moved to a nonexistent radial position of optical disc 1, it is likely to collide against optical disc 1. Hence, the target position given by encoder 21 of seek motor 12 is preferably set at the slightly inner periphery side than the accessible outermost peripheral position.

Seek motor 12 deviates optical head 10 toward the outer periphery side, and the connection area as a mirror area is detected while passing this area (step ST603), and the tracking error signal detection method is switched to the DPD method (step ST604). If a differential phase tracking error signal is successfully detected (YES in step ST605), the operation of seek motor 12 is stopped (step ST606), and a tilt compensation amount is calculated from the detected differential phase tracking error signal to start tilt control. Also, the tilt compensation amount is held as that of the system lead-out area, and is stored in tilt compensation amount storage circuit 32 after its polarity is inserted as in the system lead-in area (step ST607).

[Tracking control on system lead-out area]

After that, when a tracking error signal is successfully detected on the system lead-out area, track lead-in control may be started using fine positioning mechanism control circuit 23 and coarse positioning mechanism control circuit 17 at an appropriate timing (step ST608) so as to perform tracking control (step ST609). At this time, seek motor 12 is also driven again to control the shift amount of objective lens 5 to decrease at the tracking position. After that, the tracking control may be turned off, and a tilt compensation amount may be calculated by the aforementioned tilt adjustment sequence.

[Details of access process to system lead-out area in case of rewritable optical disc]

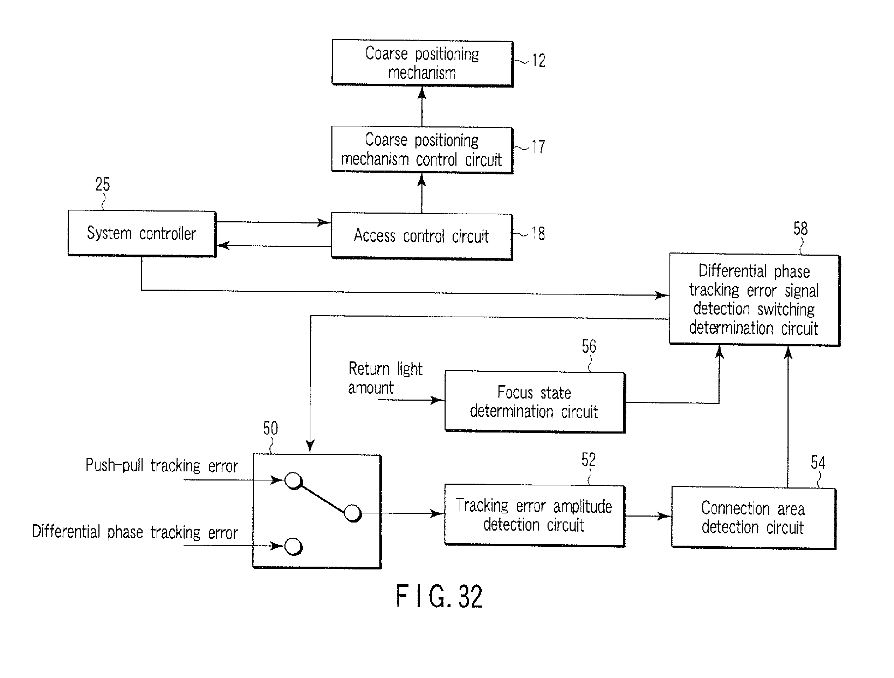

The aforementioned access control to the system lead-out area can be implemented by a processing circuit shown in FIG. 32. Especially, the processing sequence of "access control to the system lead-out area" in case of a rewritable optical disc is performed as follows.

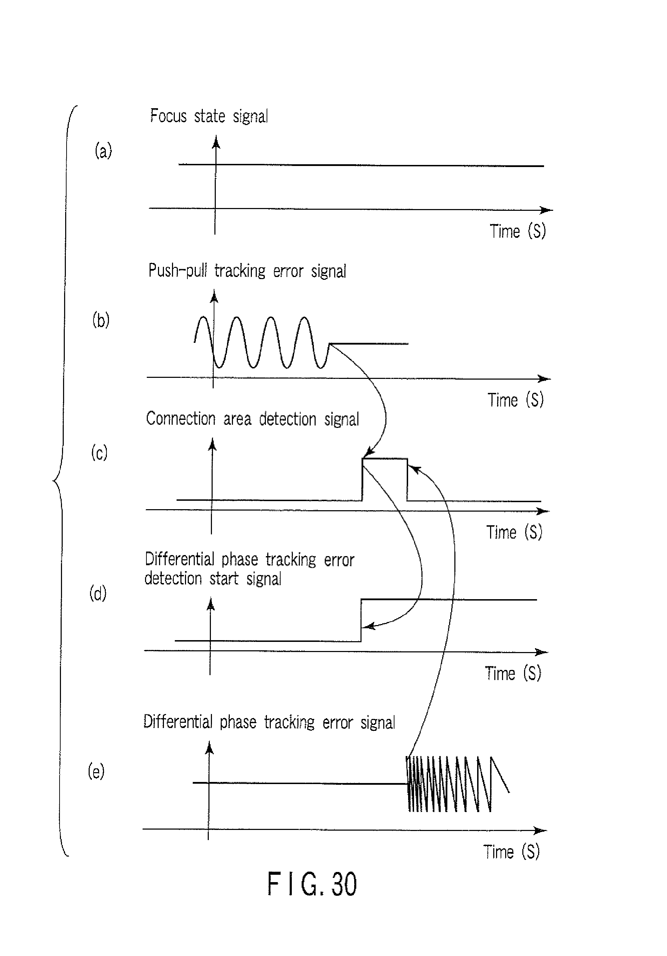

FIG. 30 is a view showing changes of a differential phase tracking error signal and the like during access to the system lead-out area at the outermost periphery of a disc. FIG. 32 is a block diagram showing an example of the arrangement of a control system that accesses the system lead-out area at the outermost periphery of a disc.

In case of a rewritable optical disc, the tracking control is applied using a push-pull tracking error signal on the data area or the data lead-in area and data lead-out area. Since the connection area outside the data lead-out area has no unevenness and is a so-called mirror area, if a beam spot passes over the connection area in the access method to the system lead-out area, a push-pull tracking error signal and differential phase tracking error signal, which are calculated from the difference of the signals from the photodetectors, respectively output zero (see portions where the amplitude becomes flat in (b) and (e) of FIG. 30).

In the arrangement of FIG. 32, circuit blocks 12, 17, 18, and 25 may be functionally equivalent to circuit blocks 12, 17, 18, and 25 of FIG. 1. Other circuit blocks 50-58 in FIG. 32 will be described below.

This push-pull tracking error signal (FIG. 30 (b)) is selected by switching circuit 50 in FIG. 32, and is sent to tracking error amplitude detection circuit 52. This circuit detects zero amplitude of a tracking error signal while a beam spot is passing the mirror area. Based on this zero detection, connection area detection circuit 54 detects that the beam spot is passing the mirror area (connection area) (FIG. 30(c)). At the same time, differential phase tracking error signal detection switching determination circuit 58 sends a command for switching detection of a tracking error signal to the differential phase tracking error method (FIG. 30(d)) to switching circuit 50 together with the output from focus state determination circuit 56 which confirms the tracking error signal becomes zero (FIG. 30(b)) although the focusing control is ON (FIG. 30(a)). After that, if it is detected from the signal end of FIG. 30(c) that the beam spot has passed the connection area (i.e., it can access the system lead-out area), the arrangement of FIG. 32 enters the operation state based on the differential phase tracking error signal.

FIG. 31 is a view for explaining an example of the profile of a tilt correction amount obtained by tilt compensation amount storage circuit 32. In a rewritable optical disc, tilt compensation amounts are obtained on only the "system lead-in area (disc radial position Ri) and system lead-out area (disc radial position Ro)" where a differential phase tracking error signal can be detected. Then, the relationship (profile) between the disc radial positions and tilt compensation amounts is calculated from at least two tilt compensation amounts (tilt correction amounts) stored according to the disc radial positions, as shown in, e.g., FIG. 31. If this profile can be obtained, a tilt correction amount between disc radial positions Ri and Ro can be calculated by estimation (see step ST320 in FIG. 25).

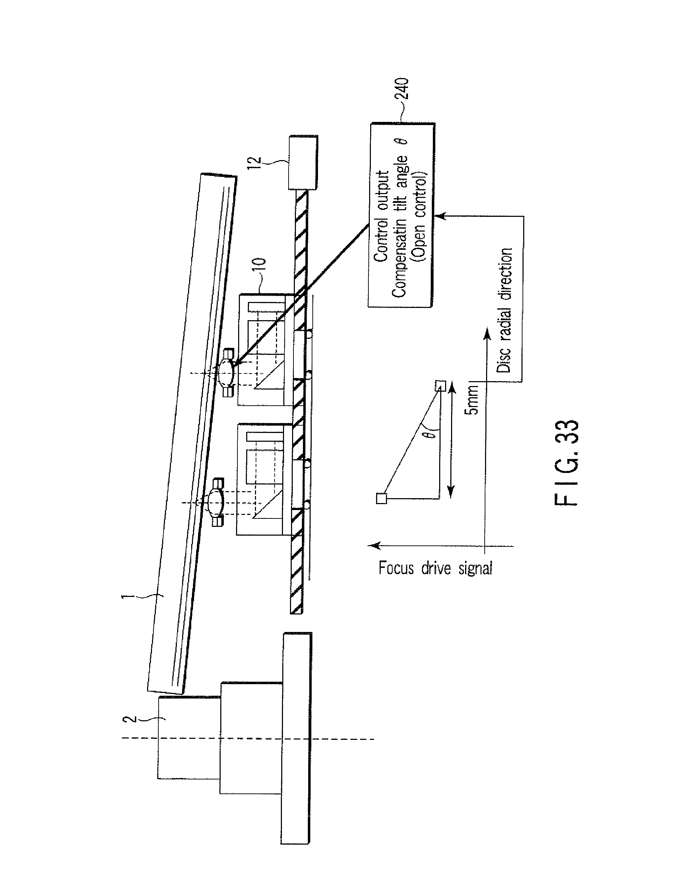

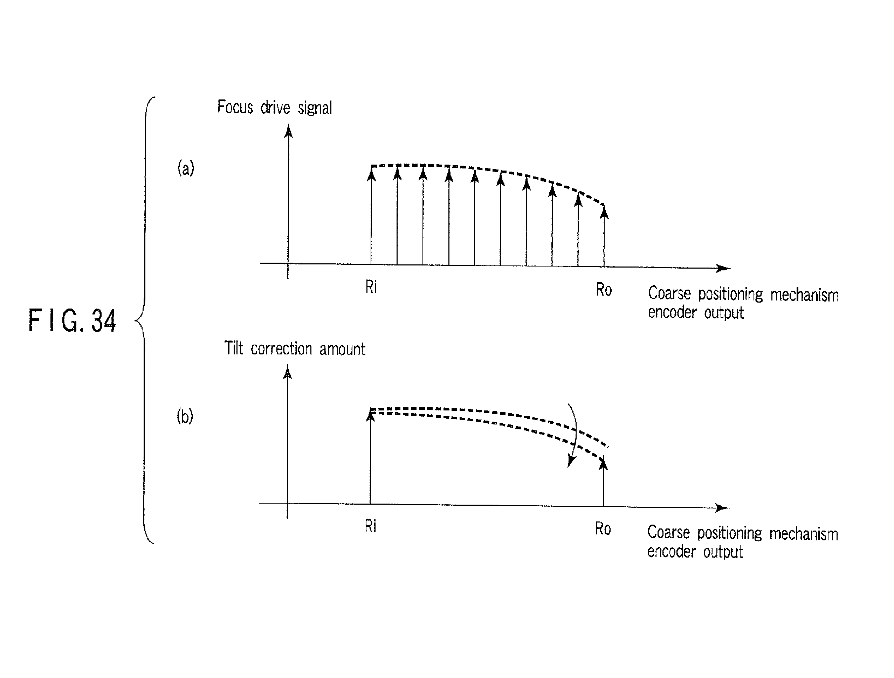

FIG. 33 is a view for explaining an example of a method of detecting the tilt (warp and/or tilt from a rotation shaft of a disc) of an optical disc loaded into a drive of the optical disc apparatus. FIG. 34 is a view for explaining another example of the profile of a tilt correction amount (which is different from FIG. 31) obtained by tilt compensation amount storage circuit 32.

FIG. 33 explains the method of detecting a signal having correlation to a warp of the disc itself. A focus drive signal is stored while the focusing control is ON and objective lens 5 is moved in the radial direction of the disc, thus acquiring a "warp profile" of disc 1 as values according to the radial positions of the disc. As a result, a profile signal shown in FIG. 34(a) is obtained. However, since the profile obtained in this way does not include any drive sensitivity information of triaxial actuator (tilt actuator) 6 of the optical disc apparatus, it includes errors if it is used as a tilt compensation amount.

After this profile signal is corrected based on the tilt compensation amount at radial position Ri of the system lead-in area and the tilt compensation amount at radial position Ro of the system lead-out area, as shown in FIG. 34(b), it is used as a tilt compensation amount, thus implementing more accurate tilt control (the arrangement shown in FIG. 33 uses a tilt compensation amount that has been corrected by open loop control output 240 of a compensation tilting angle). Note that this correction may be made on only the system lead-in area on the inner periphery side.

The tilt compensation amount may be corrected as follows. More specifically, some ordinate values on the broken curve profile in FIG. 34(a) are multiplied by values (calculated values) at corresponding radial positions on the profile in FIG. 31, thus obtaining a "corrected tilt correction amount profile" like a broken line curve which slightly "bows" in the down arrow direction in FIG. 34(b).

[Fine adjustment of tilt compensation amount using reproduction signal]

In order to improve the accuracy of the tilt compensation amounts stored in tilt compensation amount storage circuit 32 in FIG. 1 in accordance with the disc radial positions, the compensation amount is finely adjusted by the following sequence using the quality of a reproduction signal upon recording/reproducing data on the data area. In case of a read-only optical disc, a reproduction signal is used as it is. However, in case of a rewritable optical disc, temporary test recording is done, and its result is reproduced to obtain a reproduction signal for adjustment.

In the aforementioned tilt adjustment sequence, the tilt control is made by obtaining a tilt error signal as an offset amount from a tracking error signal. However, the tilt error signal suffers not only the influence of radial tilt but also that of tangential tilt. Also, the servo goal of the tilt control is to optimize the quality of a reproduction signal. Hence, in order to correct the influence of tangential tilt and to apply tilt control at a point of the optimal reproduction signal quality, fine adjustment is made using the signal quality.

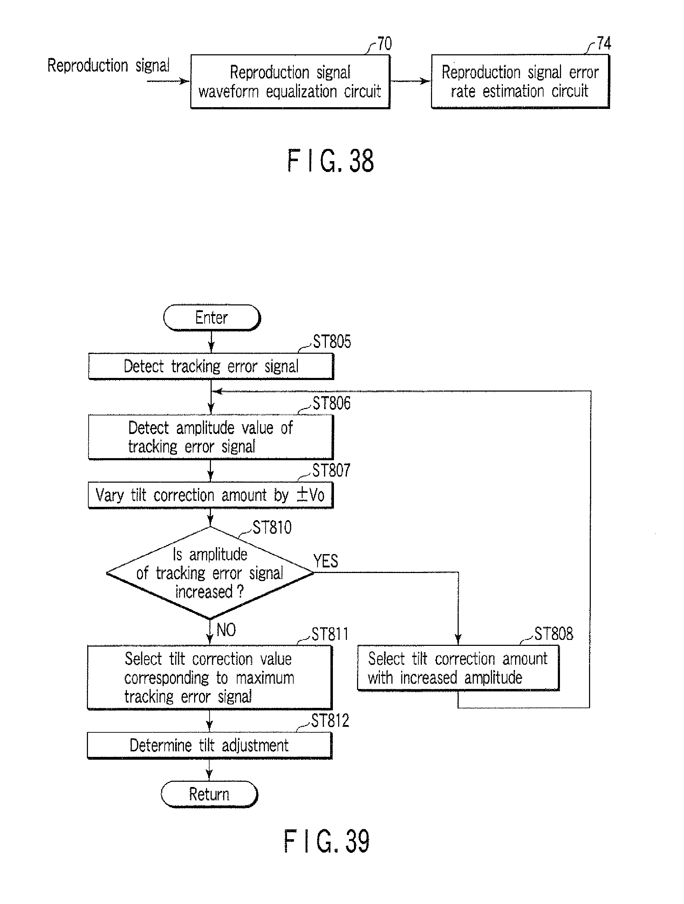

When a beam spot is controlled to deviate by seek motor 12 and is formed at a predetermined radial position, a tilt compensation amount stored in tilt compensation amount storage circuit 32 is output to tilt signal detector 30 as a value according to the radial position detected by encoder 21 (TAC: encoder) of the seek motor, and is input to lens actuator 6 via tilt adjustment mechanism control circuit 24 as a tilt manipulation amount. That is, DC tilt control is further applied while the focusing control is ON. In this state, the tracking control starts to obtain a reproduction signal. When this reproduction signal is processed by a signal processing circuit in FIG. 38 (to be described later), a substantial error rate or estimated rough error rate can be obtained.

While this error rate (to be referred to as first error rate ER1 hereinafter) is obtained, the following operation is made in accordance with an instruction from system controller 25. That is, voltage +Vo [V] is additionally applied to a tilt compensation amount to be output from tilt signal detector 30 to compensation controller 31, so that objective lens 5 rotates in the radial direction by +α° to have tilt compensation amount Vd [V] stored in tilt compensation amount storage circuit 32 in FIG. 1 as the center.

In this state, an error rate (to be referred to as second error rate ER2 hereinafter) is measured. Then, voltage -Vo [V] is applied to the stored tilt compensation amount so as to rotate objective lens 5 in the radial direction by -α° in turn. In this way, objective lens 5 rotates in a direction opposite to that upon additionally applying +Vo [V]. In this state as well, an error rate (to be referred to as third error rate ER3 hereinafter) is measured for a predetermined period of time.

In the above process, system controller 25 respectively compares error rates ER1, ER2, and ER3, which are measured by the signal processing circuit shown in FIG. 38. If ER1 > ER2 or ER3, the tilt compensation amount to be stored is set to be Vd + Vo [V] or Vd - Vo [V]. Note that if ER1 < ER2 and ER3, the tilt compensation amount upon obtaining ER1 is determined to be an optimal amount, thus ending adjustment.

FIG. 35 is a view for explaining an example of tracking error detection by a push-pull method. This method can be adopted when a push-pull tracking error signal for tracking control is obtained in the circumstances that the arrangement shown in FIG. 7 or 9 cannot detect a differential phase tracking error signal.

Note that Vo is preferably about 1/10 of a maximum voltage that can be applied as the output from the fine positioning mechanism control circuit so as to satisfactorily search for an optimal point and, more specifically, it is preferably set to be 0.2 V or less.

[Modify tilt adjustment sequence according to disc]

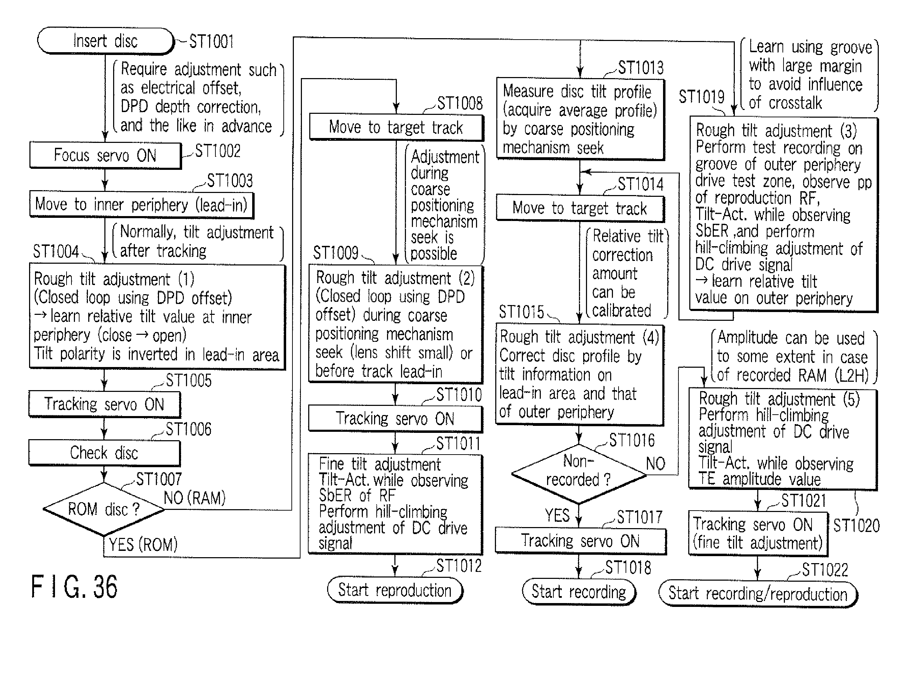

As described above, the tilt control is done using the center value of an offset of a differential phase tracking error signal. Note that a tilt error signal cannot be obtained from the tracking error signal on the data area depending on target disc 1 in some cases. In such case, the type of optical disc 1 rotated by spindle motor 2 is checked, and a different tilt control sequence is adopted according to the type of disc (see the process in FIG. 36 to be described later).

If target optical disc 1 is a read-only disc, the tilt error signal can be acquired over the entire surface of disc 1. However, in case of a rewritable disc, the track structure is not a structure based on the aforementioned pit arrays. For this reason, detection of the tilt error signal cannot be made with a high S/N over the entire area of disc 1. The tilt error signal is calibrated and used using an information signal (see FIG. 34(a)) which has correlation to a warp of the disc itself detected by another detection method with reference to the tilt compensation amount acquired on the system lead-in area (see FIG. 34(b)).

FIG. 36 is a flowchart for explaining the flow of processes including tilt adjustment according to the embodiment of the present invention (the flow of processes from when a ROM or RAM disc is mounted until reproduction and/or recording start/starts).

When a ROM or RAM disc is mounted on the apparatus (disc drive) (step ST1001), the focus servo is turned on (step ST1002) to optical head 10 to move a beam spot to the lead-in area on the inner periphery side (step ST1003). On this lead-in area, rough tilt adjustment of a closed loop using an offset of a DPD signal is executed (step ST1004). As a result of rough tilt adjustment, a relative tilt amount on the inner periphery of the disc is learned, and is stored in tilt compensation amount storage circuit 32 in FIG. 1. The stored relative tilt amount is used later in tilt compensation of an open loop. After the relative tilt amount on the inner periphery of the disc is stored, the tracking servo is turned on (step ST1005), and the type of currently mounted disc 1 (i.e., ROM or RAM disc, or the like) is checked (step ST1006). This checking process can be attained by reading information from the lead-in area of currently mounted disc 1.

If currently mounted disc 1 is a ROM disc (YES in step ST1007), a beam spot is moved to the target track (step ST1008) to execute rough tilt adjustment of the closed loop using the offset of a DPD signal (step ST1009). This rough tilt adjustment is executed during TAC (encoder 21 in FIG. 1) seek (lens shift = small) or before track lead-in control. After that, the tracking servo is turned on (step ST1010) to make fine tilt adjustment (step ST1011), thus starting reproduction of information on ROM disc 1 (step ST1012).

Note that fine tilt adjustment in step ST1011 can be executed by performing hill-climbing adjustment shown in FIG. 39 while observing the error rate (SbER) of a reproduction RF signal and supplying a DC drive signal to tilt actuator 6.

If currently mounted disc 1 is a RAM disc (NO in step ST1007), a disc tilt profile (an average profile of tilt compensation amounts in the disc radial direction) by TAG (encoder 21) seek (step ST1013). Or test recording is made on a groove area of an outer peripheral drive test zone of the RAM disc, and the amplitude (peak-to-peak: PP) of its reproduction RF signal is observed. Then, the aforementioned hill-climbing adjustment is performed while observing the error rate (SbER) of the reproduction RF signal and supplying a DC drive signal to tilt actuator 6. In this way, a relative tilt value on the outer periphery of the disc is learned, and the learning result is stored in tilt compensation amount storage circuit 32 in FIG. 1 (step ST1019).

After the disc tilt profile (average disc profile) is acquired (step ST1013) or if the relative tilt value on the outer periphery of the disc is learned (step ST1019), a beam spot is moved to the target track (step ST1014) to execute rough tilt adjustment (step ST1015). In this rough tilt adjustment, the disc profile acquired in step ST1013 is corrected based on tilt information on the lead-in area learned in step ST1004 and/or tilt information on the outer periphery of the disc learned in step ST1019 (see FIG. 34(b)).

After such various rough tilt adjustment, if currently mounted RAM disc 1 is a non-recorded blank disc (YES in step ST1016), the tracking servo is turned on (step ST1017) to.start recording (step ST1018). On the other hand, if currently mounted RAM disc 1 is a partially recorded disc (NO in step ST1016), fine tilt adjustment is made (step ST1020), and the tracking servo is turned on (step ST1021), thus starting recording or reproduction of RAM disc 1 (step ST1022). Note that fine tilt adjustment in step ST1020 can be executed by performing the aforementioned hill-climbing adjustment while observing the amplitude value of a tracking error (TE) signal and supplying a DC drive signal to tilt actuator 6.

[Fine tilt adjustment in rewritable optical disc]

As shown in FIG. 36, in case of a rewritable disc, a different fine adjustment method must be adopted depending on whether the target track that is to undergo information recording is present within a non-recorded or recorded area. Also, a different fine adjustment method must be adopted depending on whether the reflectance of a disc increases or decreases upon recording information.

When the reflectance of a disc increases upon recording information, and information has already been recorded at the target track position, the S/N of a push-pull tracking error signal is relatively high. For this reason, voltage +Vo [V] is additionally applied to a tilt compensation amount output from tilt signal detector 30 to compensation controller 31 so that the objective lens rotates by $+\alpha^\circ$ in the radial direction to have stored tilt compensation amount Vd [V] as the center.

As shown in step ST1019 in FIG. 36, in case of rewritable disc 1, it is effective to record information using a drive test zone assured in the data lead-out area present near the outer periphery of the disc, and to reproduce the recorded information to obtain a reproduction signal, thus performing fine adjustment. In this case, it is preferable to record and reproduce a signal on a track, where a stronger reproduction signal can be output, of a land or groove portion of the data lead-out area formed of the land-groove structure. More specifically, since a stronger reproduction signal can be output from the groove portion, FIG. 36 adopts the fine adjustment sequence by means of test recording on the groove portion.

As described above, with the tilt control signal acquisition method and tilt control method of the present invention, a tilt error signal is obtained by calculating the center value of an offset from a tracking error signal obtained while the focusing control is ON, and the tilt control is applied using this tilt error signal. The control band of this tilt control is a low-frequency band as low as about 1/10 of the rotational frequency. Every time a tilt error signal as a tilt control signal is obtained, a manipulation amount is input to the lens actuator to rotate the objective lens in the radial tilt direction by adding a correction amount. The tilt compensation manipulation amount is stored as a tilt compensation amount according to the disc radial position in the tilt compensation amount storage circuit. The stored tilt compensation amount is extracted by roughly estimating formation of a beam spot at a predetermined radial position by encoder 21 of seek motor 12, and a manipulation amount is input to lens actuator 6.

[Tilt error signal detection from tracking error signal during movement]

When predetermined information is read out from a beam spot that has undergone the tracking control on the system lead-in area, the beam spot moves to the data lead-in area formed outside the system lead-in area. Movement to the data lead-in area is realized by the seek control that controls while counting the number of tracks to be passed over by deviating objective lens 5 to move a beam spot in the outer periphery direction. During this seek control, since the tracking control is temporarily OFF, objective lens 5 deviates in the outer periphery direction while the focusing control and tilt control are ON.

For example, when a read-only disc is mounted on spindle motor 2, the data lead-in area is also formed of pit arrays. For this reason, when this movement is attained by deviating seek motor 12 in place of lens actuator 6, lens actuator 6 on optical head 10 is located nearly at a neural position in the tracking direction, and an offset component of a tracking error signal has correlation to a relative tilt amount between disc 1 and objective lens 5. Since a beam spot automatically passes over tracks during movement, the maximum and minimum values of a tracking error signal can be obtained. For this reason, a tilt error signal on the data lead-in area can be obtained from the offset of the tracking error signal by the same sequence as the tilt adjustment sequence on the system lead-in area. When the beam spot comes closer to the target position during movement, the tilt control is applied to set this tilt error signal to be zero, thus obtaining a tilt manipulation amount. In this sequence, the tracking control starts while outputting this tilt manipulation amount to tilt adjustment mechanism control circuit 24.

Note that the polarity of correlation to the relative tilt between the optical disc and objective lens is inverted in the system lead-in area and data lead-in area. For this reason, the polarity of the tilt compensation amount on the data area is different from that on the system lead-in area. When the tilt manipulation amount on the system lead-in area is inverted and is stored in the tilt compensation amount storage circuit as a compensation amount at a radial position of the system lead-in area, the tilt compensation amount on the data lead-in area can be managed over the entire surface of the disc without inverting the polarity of the tilt manipulation amount.

FIG. 37 is a view for explaining the relationship between the tracking error signal by the push-pull method and tilt (radial tilt) of a disc (the directions of tilts in a, b, and c in FIG. 37 respectively correspond to A, B, and C in FIG. 3). A push-pull tracking error signal produces an offset (although it is weak), as shown in FIG. 37, in accordance with the disc tilt in the same manner as in the differential phase tracking error signal.

FIG. 38 is a block diagram showing an example of the arrangement for estimating a reproduction signal error rate. A reproduction signal from the photodetector is equalized by reproduction signal waveform equalization circuit 70, and is input to reproduction signal error rate estimation circuit 74. This reproduction signal error rate estimation circuit 74 is configured to estimate, in advance, an error rate, which is likely to be generated in a decoder (not shown) later, on the basis of the input signal. This estimation can be implemented as follows. Circuit 74 has expected values of signals to be decoded at random (by checking them in advance), and outputs an error component between this expected value and actual signal as error power. Especially, circuit 74 is set to increase the detection sensitivity of an error by weighting patterns that readily cause an error to have higher gains of the error power. This circuit 74 can roughly estimate error rates ER1, ER2, and ER3 that have been explained in "fine adjustment of tilt compensation amount using reproduction signal".

FIG. 39 is a flowchart for explaining a modification of the tilt adjustment sequence. This tilt adjustment processing routine is executed, e.g., after the focusing servo is ON and before the tracking servo is ON. A tracking error signal is detected (step ST805), and the amplitude value of the tracking error signal is detected (step ST806). After that, the tilt correction amount is varied by ±Vo to check how the amplitude of the tracking error signal changes (step ST807). If the amplitude of the tracking error signal becomes large as a result of varying the tilt correction amount by ±Vo (YES in step ST810), that "tilt correction amount (either +Vo or -Vo) with the large amplitude" is selected (step ST808), and the flow returns to the amplitude value detection process of a tracking error signal (step ST806).

If the amplitude of the tracking error signal does not increase even after the tilt correction amount is varied by ±Vo by repeating the processes in steps ST806 to ST810 (NO in step ST810), a tilt correction amount corresponding to a maximum tracking error signal in the tracking error signal amplitude value detection process (step ST806) executed so far is selected (step ST811), and tilt adjustment is determined using the selected tilt correction amount (step ST812). In this manner, the tilt adjustment sequence in FIG. 39 ends.

In the embodiment of the present invention, tilt servo is made using a differential phase tracking error signal generated only on the pit area in place of a push-pull signal obtained by an optical disc with the land-groove structure. This is a characteristic feature of the embodiment of the present invention. Or a characteristic feature of the embodiment of the present invention lies in that tilt compensation (correction) is made while checking the polarity to be adjusted using a differential phase tracking error signal in place of a push-pull method which is difficult to attain tilt detection (due to a problem of an S/N and the like). In this case, the S/N can be improved to performing adjustment (FIG. 39 and the like) to maximize the amplitude of the differential phase tracking error signal. Especially, in a single-sided/multi-layer disc which tends to have a smaller signal level, certain tilt control can be implemented.

Note that the present invention is not limited to the aforementioned embodiments themselves, and can be embodied by variously modifying required constituent elements without departing from the scope of the invention when it is practiced. For example, a tracking error signal used in tilt detection may be obtained by the push-pull method described with reference to FIG. 35 as long as a sufficiently high signal S/N can be assured in place of the DPD method. The detection process in the tilt signal detector may include either a process for obtaining a PV (Peak-to-peak voltage) center value of a differential phase tracking error signal or a process for obtaining an average value (Average). However, if the number of sample points is insufficient, an accurate offset amount cannot be obtained. If eccentricity is large, the number of sample points can be small since one track crossing can be monitored. The moving method from the system lead-in area to the data lead-in area may use either a method of deviating objective lens 5 by lens actuator 6 while counting the number of tracks or a method of making access by only seek motor 12 without using lens actuator 6. The tilt actuator is not limited to the arrangement that uses triaxial lens actuator 6, and may adopt an actuator which tilts a chassis of the disc drive or an actuator which tilts optical disc 1 together with spindle motor 2.

Also, various inventions can be formed by appropriately combining a plurality of required constituent elements disclosed in the embodiment. For example, some required constituent elements may be deleted from all the required constituent elements disclosed in the embodiment. Furthermore, required constituent elements according to different embodiments may be combined as needed.

**Claims**

1. An optical disc apparatus for recording or reproducing information on or from an optical disc which has an information recording layer with spiral or concentric tracks, said apparatus being **characterized by** comprising:

   an optical head (10) which records or reproduces information by focusing a laser beam on the information recording layer of the optical disc (1) via an objective lens (5);
   a focus controller (22) which deviates the objective lens (5) to bring a beam spot of the laser beam into focus with the information recording layer of the optical disc (1);
   a positioning unit (12) which positions the optical head (10) at a target track;
   a photodetector (9, 102) which is mounted on the optical head (10) and receives reflected light reflected by the optical disc (1);
   a position error detector (19) which detects a position error between the beam spot focused by the optical head (10), and the target track;
   a tilt actuator (6) which tilts the objective lens (5);
   a tilt controller (24-25, 30-32) which performs tilt control of the tilt actuator (6) using a signal from the position error detector (19); and
   a positioning controller (20, 17, 23) which deviates the positioning unit (12) based on a detection result of the position error detector (19), after performing the tilt control of the tilt actuator (6) by the tilt controller (24-25, 30-32).

2. An apparatus according to claim 1, **characterized in that** a signal of the position error from the position error detector includes an offset amount, where said signal of the position error is used in the tilt controller.

3. An apparatus according to claim 2, **characterized in that** the offset amount of the signal of the position error has an offset value which is calculated after normalization to maintain a constant signal amplitude.

4. An apparatus according to any one of claims 1 to 3, **characterized in that** the photodetector is divided into a plurality of detectors to form a 4-split photodetector, and the position error signal is a differential phase signal obtained by comparing phases of two signals as sums of signals from the diagonally opposed detectors of the 4-split photodetector.

5. An apparatus according to any one of claims 1 to 3, **characterized in that** the photodetector is divided into a plurality of detectors to form a 4-split photodetector, and the position error signal is a differential phase signal produced by adding and subtracting two differential phase signals obtained by comparing phases of signals from the neighboring detectors of the 4-split photodetector.

6. An apparatus according to any one of claims 1 to 3, **characterized in that** a control loop of the tilt controller is closed while a control loop of the positioning controller is opened, after it is confirmed that tilt servo is applied by a predetermined manipulation amount, the control loop of the tilt controller is opened, and the control loop of the positioning controller is closed while the predetermined manipulation amount is applied to the tilt controller in an open loop.

7. A control method for use with an optical head that outputs and receives a laser beam via an objective lens, and to be used when information is recorded or reproduced on or from an optical disc having an information recording layer with spiral or concentric tracks, wherein said optical head is controlled by a control system including focusing control, tracking control, and tilt control, said control method being **characterized by** comprising:

    performing (ST102-ST104 in FIG. 23) the focusing control that focuses a spot (100) of a laser beam output from the optical head (10) on a track of the optical disc (1);
    detecting (ST105) a tracking error signal corresponding to a positional deviation between the focused beam spot and a target track;
    performing (ST106-ST107) the tilt control that deviates a tilt as a relative tilt between the optical disc and the objective lens based on a detection result (e.g., ST204-ST206 in FIG. 24) of the tracking error signal; and
    performing (ST108) the tracking control based on the detection result of the tracking error signal.

8. A method according to claim 7, **characterized in that** the detection result of the tracking error signal used in the tilt control has an offset corresponding to the tilt, and the offset is used in the tilt control.

9. A method according to claim 8, **characterized in that** the tracking error signal with the offset is normalized by the tracking error signal free from any offset to obtain a constant signal amplitude, and
    an offset of a center value of the normalized tracking error signal with the offset with respect to a center value of the normalized tracking error signal free from any offset is used in the tilt control.

10. A method according to any one of claims 7 to 9, **characterized in that** the optical head includes a 4-split photodetector including two sets of diagonally opposed detectors, and a differential phase signal obtained by comparing phases of a sum signal from one set of diagonally opposed detectors of the 4-split photodetector and a sum signal from the other set of diagonally opposed detectors of the 4-split photodetector is used as the tracking error signal.

11. A method according to any one of claims 7 to 9, **characterized in that** the optical head includes a 4-split photodetector including two sets of neighboring detectors, and a signal obtained by adding a phase comparison result of two signals from one set of neighboring detectors of the 4-split photodetector and a phase comparison result of two signals from the other set of neighboring detectors of the 4-split photodetector is used as the tracking error signal.

12. A method according to any one of claims 7 to 9, **characterized by** further comprising:

    holding a tilt servo amount by activating the tilt control while the tracking control is inactive;
    activating the tilt control in an open loop to have the held tilt servo amount as a predetermined manipulation amount while the focusing control servo and the tracking control servo are active; and
    activating the tracking control.

13. A tilt compensation value storage method for use with an optical head that outputs and receives a laser beam via an objective lens, and to be used when information is recorded or reproduced on or from an optical disc having a data area including spiral or concentric tracks between a predetermined inner peripheral area and a predetermined outermost peripheral area, said tilt compensation value storage method being **characterized by** comprising:

    moving (ST502 in FIG. 28) the optical head to the data area slightly inside the outermost peripheral area;
    detecting (ST503-ST506) a tracking error signal corresponding to a positional deviation between a focused beam spot and a target track by a detection method suited to the data area, moving the beam spot toward the predetermined outermost peripheral area, and switching the detection method of the tracking error signal to a detection method on the outermost peripheral area after the beam spot has passed a connection area formed between the data area and the predetermined outermost peripheral area;
    detecting (ST507) a tracking error signal corresponding to a positional deviation between the focused beam spot and a target track;
    performing (ST508-ST511) tilt control that deviates a tilt as a relative tilt between the optical disc and the objective lens based on a detection result of the tracking error signal; and

storing (ST512) a control result of the tilt control as a compensation value of the tilt, as a combination of a radial position of the optical disc where the optical head is located.

FIG. 1

(a)

Differential phase tracking error signal
(waveform observed due to disc eccentricity)

Time (S)

Disc rotation period

(b)

Beam spot
100

Relative deviation path of beam
spot for pit array, which is
produced due to disc eccentricity

Information pit array 101

# FIG.2

(a1) Differential phase tracking error signal (waveform observed upon crossing tracks)

(b1) Differential phase tracking error signal (waveform observed upon crossing tracks)

(c1) Differential phase tracking error signal (waveform observed upon crossing tracks)

Information pit array 101

Beam spot 100

(a2)

100

(b2)

100

(c2)

Optical disc 1

Objective lens 5

(a3) Radial direction
A) Disc tilt = +0.8°

(b3) Radial direction
B) Disc tilt = +0°

(c3) Radial direction
C) Disc tilt = −0.8°

F I G. 3

Disc tilting angle α

(a)

Relationship between disc tiling angle α and center value of differential phase tracking error signal

(b)

FIG.4

FIG. 5

(a)

Differential phase tracking error signal

TE Signal Output ($\alpha = -0.4$)

(b)

Differential phase tracking error signal

TE Signal Output ($\alpha = 0.0$)

(c)

Differential phase tracking error signal

TE Signal Output ($\alpha = 0.4$)

(d)

Differential phase tracking error signal

TE Signal Output ($\alpha = 0.8$)

TE : Tracking Error

FIG. 6

(a)

Information pit array 101

Beam spot 100

Photodetector 102

Differential phase tracking error signal
(waveform observed upon crossing tracks)

A D

B C

(b)

Time (S)

1) Phase comparison result between (A+C) and (B+D) → differential phase signal
1) (Phase comparison result of A and D) + (phase comparison result of B and C) → differential phase signal

Photodetector 102

Gain A1

| A | D |
| B | C |

Gain A2

Phase comparator
(phase comparison circuit
of (A+C) and (B+D))

Differential phase
tracking error signal

CMP

FIG. 7

EP 1 553 571 A2

(A+C) signal ——————————→ (a)

(B+D) signal ——————————→ (b)

Differential phase
tracking error signal ——————————→ (c)

## F I G. 8

Photodetector 102

Phase comparator 1
(phase comparison
of A and D) ~CMP1

Gain A3

| A | D |
| B | C |

Differential phase
tracking error
signal

Phase comparator 2
(phase comparison
of C and B) ~CMP2

## F I G. 9

Differential phase tracking error signal
(waveform observed due to disc eccentricity)

Time (S)

(a)

Disc rotation period

Outer periphery
lead-out area

(b)

Beam spot 100

Relative deviation
path of beam
spot for pit array,
which is produced
due to disc
eccentricity

Connection area

Data lead-out
area

(c)

Information
pit array 101

Data area

F I G. 10

EP 1 553 571 A2

EP 1 553 571 A2

Rout

R-LO-O

R-LO-I

R-DO-O

R-D-O

R-D-I

R-DI-O

R-LI-O

R-LI-I

System lead-in area

Connection area

Data lead-in area

System lead-out area

Rin

Connection area

Data lead-out area

Data area

## FIG. 11

EP 1 553 571 A2

FIG. 12

(a)

L1 layer

Data lead-out area

Connection area

System lead-out area

Data area

Data middle area

Connection area

System middle area

(b)

L0 layer

System lead-in area

Connection area

Data lead-in area

System middle area

Connection area

Data middle area

Data area

F I G. 13

F I G. 14

FIG. 15

F I G. 16

F I G. 17

Tilt adjustment
mechanism
control circuit  ~24

Compensation
controller  ~31

30

Tilt signal detector

30d~ Center value
detection circuit

S/H circuit  ~30b

30c~ Maximum/minimum
value detection
circuit

Sample point
number
determination
circuit  ~30a

Positioning error
detection circuit  ~19

Eccentricity state
determination circuit  ~33

Tilt compensation
amount storage circuit  ~32

Spindle motor
rotation control circuit  ~29

F I G. 18

(a)

Differential phase tracking error signal
(waveform observed due to disc eccentricity)

Disc rotation period

(b)

Tracking error signal sampled by
tilt signal detector

S/H timing

FIG. 19

Differential phase tracking error signal
(waveform observed upon crossing disc)

(a)

Disc rotation period

Tilt adjustment
mechanism
control circuit ~24

Compensation
controller ~31

19

Positioning error
detection circuit

30

Tilt signal detector

Center value
detection circuit

S/H circuit

Maximum/minimum
value detection
circuit

Sample point
number
determination
circuit

Determine number of sample points and sample start timing
based on determination result of eccentricity state determination
circuit (with reference to encoder signal processed by spindle
motor rotation control circuit)

Eccentricity state
determination circuit ~33

Tilt compensation
amount storage circuit ~32

Spindle motor
rotation control circuit ~29

FIG. 20

EP 1 553 571 A2

Differential phase tracking error signal
(waveform observed due to disc eccentricity)

(a)

Disc rotation period

Tilt adjustment mechanism control circuit ~24

Compensation controller ~31

30

Tilt signal detector

Center value detection circuit

S/H circuit

Maximum/minimum value detection circuit

Sample point number determination circuit

19

Positioning error detection circuit

Fine positioning mechanism control circuit ~23

33

Eccentricity state determination circuit

Compensation controller ~20

25

Tilt compensation amount storage circuit ~32

29

Spindle motor rotation control circuit

System controller

FIG. 21

EP 1 553 571 A2

Fine positioning mechanism drive signal

(a)

Differential phase tracking error signal
(waveform observed by vibration of fine positioning mechanism)

(b)

Disc rotation period

F I G. 22

ST101

Start information
recording/reproduction

ST102

Detect focus error signal

ST103

Adjust electrical system offset

ST104

Focus servo ON

ST105

Detect tracking error signal

ST106

Tilt servo ON

ST107

Settle tilt servo output value

ST108

Tracking servo ON

ST109

Record/reproduce information signal

ST110

End information
recording/reproduction

F I G. 23

ST201

Start

ST202

Read radial position from coarse
positioning mechanism encoder

ST203

Focus servo ON

ST204

Detect center value of tracking error
signal

ST205

Tilt servo ON to set center value of
tracking error signal to be zero

ST206

Center value
of tracking error signal
= zero ?

NO

YES

ST207

Hold tilt servo output value

ST208

Store held tilt servo output value in tilt
compensation amount storage circuit in
combination with value of coarse
positioning mechanism encoder

ST209

End

F I G. 24

FIG. 25

Start tilt adjustment ST301

Move objective lens to inner periphery lead-in area ST302

Read radial position from coarse positioning mechanism encoder ST303

Focus servo ON ST304

Detect center value of tracking error signal ST305

Tilt servo ON to set center value of tracking error signal to be zero ST306

Center value of tracking error signal = zero ? ST307
NO / YES

Hold tilt servo output value ST308

Store held tilt servo output value (Vi) in tilt compensation amount storage circuit in combination with value (Ri) of coarse positioning mechanism encoder ST308a

Move objective lens to outer periphery lead-out area ST309

Read radial position from coarse positioning mechanism encoder ST310

Focus servo ON ST311

Detect center value of tracking error signal ST312

Tilt servo ON to set center value of tracking error signal to be zero ST313

Center value of tracking error signal = zero ? ST314
NO / YES

Hold tilt servo output value ST315

Store held tilt servo output value (Vo) in tilt compensation amount storage circuit in combination with value (Ro) of coarse positioning mechanism encoder ST316

Move objective lens to data area where information is recorded/reproduced ST317

Read radial position from coarse positioning mechanism encoder ST318

Focus servo ON ST319

Calculate tilt servo output value from value of coarse positioning mechanism encoder (by $V = (Vo - Vi)/(Ro - Ri) \times R$) according to radial position R) ST320

Output tilt servo output value ST321

Tracking servo ON ST322

End tilt adjustment ST323

FIG. 26

F I G. 27

EP 1 553 571 A2

Start access to system
lead-out area of
outermost periphery ~ST501

Move objective lens to data area ~ST502
slightly inside system lead-out area
of outermost periphery by seek
operation of beam spot

Move objective lens to form beam ~ST503
spot on outermost peripheral track
of data area inside system lead-out
area

Output predetermined value to ~ST504
control circuit to deviate coarse
positioning mechanism to outer
periphery side

Output manipulation amount to ~ST505
control circuit to stop coarse
positioning mechanism

Output manipulation amount to fine ~ST506
positioning control circuit to turn off
tracking operation of fine positioning
mechanism

Observe differential phase tracking ~ST507
error signal

Detect center value of differential ~ST508
phase tracking error signal

Tilt servo ON to set center value ~ST509
of differential phase tracking error
signal of system lead-out area of
outermost periphery to be zero

Center ~ST510
value of tracking error
signal zero ?

NO

YES

Hold tilt servo output value ~ST511

Store held tilt servo output value in ~ST512
tilt compensation amount storage
circuit as tilt compensation amount
of system lead-out area of
outermost periphery as combination
with value of coarse positioning
mechanism encoder

End access to system ~ST513
lead-out area of
outermost periphery

F I G. 28

```
                    ┌─────────────────────┐
                    │ Start access to system │──ST601
                    │   lead-out area of     │
                    │  outermost periphery   │
                    └─────────────────────┘
                              │
                              ▼          ──ST602
        ┌─────────────────────────────────────┐
        │ Start operation for seeking coarse   │
        │ positioning mechanism from data area │
        │ slightly inside system lead-out area to │
        │ outer periphery at constant low velocity │
        └─────────────────────────────────────┘
                              │          ──ST603
                              ▼
        ┌─────────────────────────────────────┐
        │         Detect mirror area           │
        └─────────────────────────────────────┘
                              │          ──ST604
                              ▼
        ┌─────────────────────────────────────┐
        │ Start tracking error detection using │
        │ differential phase tracking error signal │
        └─────────────────────────────────────┘
                              │
                              ▼              ──ST605
                         ╱─────────╲
              NO        ╱ Can differential ╲
          ┌───────────╱ phase tracking error ╲
          │           ╲  signal be detected  ╱
          │            ╲        ?           ╱
          │             ╲─────────────────╱
          │                      │ YES
          │                      ▼          ──ST606
          │     ┌─────────────────────────────────┐
          │     │ Stop seek operation of coarse    │
          │     │    positioning mechanism         │
          │     └─────────────────────────────────┘
          │                      │          ──ST607
          │                      ▼
          │     ┌─────────────────────────────────┐
          │     │ Tilt servo using differential phase │
          │     │    tracking error signal         │
          │     └─────────────────────────────────┘
          │                      │          ──ST608
          │                      ▼
          │     ┌─────────────────────────────────┐
          │     │ Output manipulation amount to fine │
          │     │ positioning control circuit to turn on │
          │     │ tracking operation of fine positioning │
          │     │ mechanism                        │
          │     └─────────────────────────────────┘
          │                      │          ──ST609
          │                      ▼
          │     ┌─────────────────────────────────┐
          │     │ Start tracking operation using   │
          │     │ differential phase tracking error signal │
          │     └─────────────────────────────────┘
          │                      │
          │                      ▼
          │            ┌─────────────────────┐
          │            │ End access to system │──ST610
          │            │   lead-out area of    │
          │            │  outermost periphery  │
          │            └─────────────────────┘
```

F I G. 29

(a) Focus state signal

Time (S)

(b) Push-pull tracking error signal

Time (S)

(c) Connection area detection signal

Time (S)

(d) Differential phase tracking error detection start signal

Time (S)

(e) Differential phase tracking error signal

Time (S)

F I G. 30

Tilt correction amount

Ri

Ro

Coarse positioning mechanism
encoder output

F I G. 31

EP 1 553 571 A2

EP 1 553 571 A2

Coarse positioning mechanism — 12

Coarse positioning mechanism control circuit — 17

25

System controller

Access control circuit — 18

58

Differential phase tracking error signal detection switching determination circuit

56

Return light amount ——→ Focus state determination circuit

50

Push-pull tracking error ——→

Differential phase tracking error ——→

52

Tracking error amplitude detection circuit

54

Connection area detection circuit

F I G. 32

F I G. 33

FIG.34

(a)

Focus drive signal

Ri          Ro          Coarse positioning mechanism
encoder output

(b)

Tilt correction amount

Ri          Ro          Coarse positioning mechanism
encoder output

Groove

Land

Optical disc 1

5

Lens

Photodetector

−

+

Push-pull tracking error

F I G. 35

Insert disc — ST1001

(Require adjustment such as electrical offset, DPD depth correction, and the like in advance)

Focus servo ON — ST1002

Move to inner periphery (lead-in) — ST1003

ST1004 (Normally, tilt adjustment after tracking)

Rough tilt adjustment (1)
(Closed loop using DPD offset)
→ learn relative tilt value at inner periphery (close → open)
Tilt polarity is inverted in lead-in area

Tracking servo ON — ST1005

Check disc — ST1006

ROM disc ? — ST1007
NO (RAM)
YES (ROM)

Move to target track — ST1008

(Adjustment during coarse positioning mechanism seek is possible)

ST1009 Rough tilt adjustment (2)
(Closed loop using DPD offset) during coarse positioning mechanism seek (lens shift small) or before track lead-in

Tracking servo ON — ST1010

Fine tilt adjustment — ST1011
Tilt-Act. while observing SbER of RF
Perform hill-climbing adjustment of DC drive signal

Start reproduction — ST1012

Measure disc tilt profile (acquire average profile) by coarse positioning mechanism seek — ST1013

Move to target track — ST1014

(Relative tilt correction amount can be calibrated)

ST1015 Rough tilt adjustment (4)
Correct disc profile by tilt information on lead-in area and that of outer periphery

Non-recorded ? — ST1016
NO
YES — ST1017
Tracking servo ON

Start recording — ST1018

(Learn using groove with large margin to avoid influence of crosstalk) — ST1019

Rough tilt adjustment (3)
Perform test recording on groove of outer periphery drive test zone, observe pp of reproduction RF,
Tilt-Act. while observing SbER ,and perform hill-climbing adjustment of DC drive signal
→ learn relative tilt value on outer periphery

(Amplitude can be used to some extent in case of recorded RAM (L2H))

Rough tilt adjustment (5)
Perform hill-climbing adjustment of DC drive signal
Tilt-Act. while observing TE amplitude value

Tracking servo ON (fine tilt adjustment) — ST1020, ST1021

Start recording/reproduction — ST1022

FIG. 36

EP 1 553 571 A2

FIG. 37

(a)        (b)        (c)

Push-pull tracking error signal

Push-pull tracking error signal

Push-pull tracking error signal

Beam spot 100

Land

Groove

5

100

100

EP 1 553 571 A2

Reproduction signal →

┌─────────────────────────────┐ ⌐70
│ Reproduction signal         │
│ waveform equalization circuit│
└─────────────────────────────┘
            →
┌─────────────────────────────┐ ⌐74
│ Reproduction signal error   │
│ rate estimation circuit     │
└─────────────────────────────┘

F I G. 38

```
                    ( Enter )
                        │
                        ▼            ⌐ST805
        ┌─────────────────────────────────┐
        │ Detect tracking error signal    │
        └─────────────────────────────────┘
                        │
                        ▼            ⌐ST806
        ┌─────────────────────────────────┐
        │ Detect amplitude value of       │
        │ tracking error signal           │
        └─────────────────────────────────┘
                        │
                        ▼            ⌐ST807
        ┌─────────────────────────────────┐
        │ Vary tilt correction amount by ±Vo │
        └─────────────────────────────────┘
                        │
                        ▼            ⌐ST810
                     ╱        ╲
                    ╱ Is amplitude ╲   YES
                   ╱ of tracking error ╲ ────────┐
                   ╲ signal increased ? ╱         │
                    ╲               ╱             │
                     ╲           ╱                │
                        │ NO                      │
                        ▼    ⌐ST811               ▼    ⌐ST808
        ┌─────────────────────────┐   ┌─────────────────────────┐
        │ Select tilt correction  │   │ Select tilt correction  │
        │ value corresponding to  │   │ amount with increased   │
        │ maximum tracking error  │   │ amplitude               │
        │ signal                  │   └─────────────────────────┘
        └─────────────────────────┘
                        │
                        ▼    ⌐ST812
        ┌─────────────────────────┐
        │ Determine tilt adjustment│
        └─────────────────────────┘
                        │
                        ▼
                   ( Return )
```

F I G. 39